(19) Europäisches Patentamt
European Patent Office
Office européen des brevets

(11) EP 0 603 056 B1

(12) **FASCICULE DE BREVET EUROPEEN**

(45) Date de publication et mention
de la délivrance du brevet:
**17.03.1999 Bulletin 1999/11**

(51) Int Cl.⁶: **H04L 12/26**, H04Q 11/04

(21) Numéro de dépôt: **93403016.4**

(22) Date de dépôt: **14.12.1993**

(54) **Procédé de simulation de transmission sur un réseau de transmission par transfert asynchrone et simulateur de transmission sur un tel réseau**

Verfahren zur Simulation der Übertragung über ein asynchrones Transfermodus-Übertragungsnetz und Simulator zur Übertragung über ein solches Netz

Method of simulating the transmission on an asynchronous transfer mode transmission network and simulator for transmission on such a network

(84) Etats contractants désignés:
**DE GB**

(30) Priorité: **16.12.1992 FR 9215178**

(43) Date de publication de la demande:
**22.06.1994 Bulletin 1994/25**

(73) Titulaire: **FRANCE TELECOM**
**75015 Paris (FR)**

(72) Inventeurs:
- **Houdoin, Thierry**
  **F-75116 Paris (FR)**
- **Cochennec, Jean-Yves**
  **F-75116 Paris (FR)**

(74) Mandataire: **Schmit, Christian Norbert Marie et al**
**Cabinet Ballot-Schmit**
**7, rue Le Sueur**
**75116 Paris (FR)**

(56) Documents cités:
**FR-A- 2 660 501**

- **PATENT ABSTRACTS OF JAPAN vol. 13, no. 121 (E-732)24 Mars 1989 & JP-A-63 290 423 (SONY) 28 Novembre 1988**
- **NTZ NACHRICHTENTECHNISCHE ZEITSCHRIFT vol. 43, no. 12 , Décembre 1990 , BERLIN DE pages 888 - 893 H. W. ARWEILER ETAL. 'MESSTECHNIK FÜR ZUKÜNFTIGE BREITBANDSYSTEME'**
- **PATENT ABSTRACTS OF JAPAN vol. 17, no. 223 (E-1359) 07 Mai 1993 & JP-A-04 356 843 (ANRITSU) 10 Décembre 1992**

## Description

La présente invention concerne un procédé de simulation de transmission sur un réseau de transmission par transfert asynchrone du type réseau ATM (Asynchronous Transfert Mode). Elle concerne également un simulateur de transmission sur un tel réseau.

On rappelle à ce propos qu'un réseau ATM permet la transmission d'informations numériques ayant des débits variés, pouvant être importants, allant en effet jusqu'à 155 Mbit/s.

On rappelle également que la transmission mode ATM se fait par transfert de blocs d'informations de longueur constante. La quantité élémentaire d'informations transmises est de 48 octets; le bloc d'informations transmis en ATM est dénommé cellule et est identifié par une étiquette de 5 octets, que l'on appelle aussi en-tête. La longueur totale d'une cellule est donc de 53 octets.

On rappelle aussi que deux autres grandes classes de modes de transmissions numériques existent également à l'heure actuelle. Il s'agit du mode circuit à 64 kbit/s et du mode paquet utilisé par exemple par le réseau Transpac.

La transmission en mode ATM présente la souplesse de transmission du mode paquet, qui autorise des transmissions à des débits variés et en même temps la simplicité des protocoles du mode circuit.

A l'heure actuelle ce mode de transmission n'est pas encore opérationnel et des travaux portant sur l'étude des caractéristiques de ce réseau ont été entrepris par le Déposant afin de mettre au point les sources d'émission-réception en mode ATM, c'est-à-dire plus précisément les terminaux raccordés à un tel réseau qu'il s'agisse d'un réseau local ou non.

Le document FR-A- 2 660 501 constitue l'état de la technique le plus proche.

Pour résoudre ce problème, le Déposant a eu l'idée de procéder à une simulation du réseau de transmission en mode ATM et notamment, de simuler le raccordement du réseau à de tels terminaux et de simuler une transmission bidirectionnelle en mode ATM entre deux terminaux.

La présente invention a plus particulièrement pour objet un procédé de simulation de transmission sur un réseau de transmission par transfert asynchrone, tel que revendiqué en revendication 1.

Selon le procédé, la simulation du raccordement au réseau par un terminal consiste en réception à:

- adapter le rythme d'arrivée de cellules issues du terminal émetteur au rythme des cellules générées;
- multiplexer les cellules reçues aux cellules générées pour obtenir le signal numérique de format et de débit correspondant aux normes du réseau.

Selon le procédé, la simulation du raccordement au réseau par un terminal, consiste en émission à:

- identifier dans le signal numérique généré, des cellules destinées à un terminal de réception;
- transmettre les cellules identifiées à ce terminal au rythme de réception par le terminal.

Selon un autre aspect de l'invention, le procédé consiste à simuler la transmission selon les deux sens de transmission d'un terminal A vers un terminal B et inversement.

Selon une autre caractéristique de l'invention, la génération d'erreur réseau consiste à générer des erreurs binaires et/ou des erreurs cellules et/ou des écarts variables entre cellules phénomène dénommé "gigue".

Selon une autre caractéristique de l'invention, la génération d'erreurs binaires dans le signal numérique incident de format et de débit correspondant aux normes de transmission du réseau comporte les étapes suivantes:

- enregistrer un ou plusieurs modèles prédéterminés de génération d'erreurs;
- charger dans des moyens de mémorisation à lecture et écriture le modèle désiré de manière à obtenir un signal numérique de génération d'erreur par lecture de ces moyens de mémorisation,
- combiner le signal de génération d'erreur au signal incident de manière à introduire des erreurs sur des éléments binaires de ce signal.

Selon une autre caractéristique de l'invention, la génération d'erreurs cellules dans le signal numérique incident ayant un format et ayant un débit correspondant aux normes de transmission d'un réseau ATM et comprenant des cellules affectées à une communication, identifiables par leur en-tête, comporte les étapes suivantes:

- enregistrer un ou plusieurs modèles d'erreurs prédéterminés;
- charger dans des moyens de mémorisation à lecture et écriture le modèle désiré de manière à obtenir un signal numérique de génération d'erreurs par lecture de ces moyens de mémorisation;
- générer des cellules erronées;
- remplacer des cellules du signal incident par des cellules erronées en fonction du cadencement imposé par le signal de génération d'erreur.

Selon une autre caractéristique de l'invention, la génération de gigue cellules dans un signal incident transmis en mode ATM, comprend les étapes suivantes:

- mémoriser un modèle de consigne de gigue préétabli,
- déterminer l'écart entre les cellules incidentes relatives à une même communication,
- modifier ou non l'écart entre cellules de cette même communication selon la consigne.

L'invention concerne également un simulateur de transmission sur un réseau de transmission par transfert asynchrone tel que revendiqué en revendication 18.

Selon une autre caractéristique de l'invention, les moyens de raccordement comportent des moyens de raccordement en réception d'un terminal au réseau et des moyens de raccordement en émission du réseau au terminal.

Selon une autre caractéristique de l'invention, les moyens de raccordement en réception sont aptes à recevoir des cellules émises par un terminal A, ces moyens comportent des moyens d'adaptation du rythme d'arrivée de ces cellules aux cellules générées, des moyens de multiplexage pour multiplexer les cellules reçues aux cellules générées de manière à obtenir le signal de format et de débit requis.

Selon une autre caractéristique de l'invention, les moyens de raccordement en émission comportent des moyens d'identification des cellules de manière à détecter dans un signal numérique généré, les cellules destinées à un terminal et des moyens de transmission de ces cellules au terminal.

Selon une autre caractéristique de l'invention, les moyens de traitement et de commande comportent des moyens de génération d'erreurs sur un signal incident, ce signal étant le signal numérique généré ou le signal obtenu par multiplexage.

Selon une autre caractéristique, les moyens de génération d'erreur comportent des moyens de générateur d'erreurs binaires.

Selon une autre caractéristique, les moyens de génération d'erreur comportent des moyens de génération d'erreurs de cellules.

Selon une autre caractéristique, les moyens de génération d'erreur comportent des moyens de génération de gigue ou d'écart variable entre cellules.

Les moyens de génération d'erreurs binaires comportent:

- des premiers moyens de mémorisation dans lesquels sont enregistrés un ou plusieurs modèles prédéterminés de génération d'erreurs,
- des deuxièmes moyens de mémorisation à lecture et écriture dans lesquels est chargé le modèle désiré de manière à obtenir un signal numérique de génération d'erreur par lecture de ces deuxièmes moyens de mémorisation,
- des moyens de commande aptes à commander des opérations de lecture et d'écriture dans un deuxième moyens de mémorisation,
- des moyens de combinaison du signal incident et du signal de génération d'erreur.

Les moyens de génération d'erreurs cellules comportent :

- des premiers moyens de mémorisation dans lesquels sont enregistrés un ou plusieurs modèles prédéterminés de génération d'erreurs cellule;
- des deuxièmes moyens de mémorisation à lecture et écriture dans lesquels on charge au moment voulu le modèle désiré de manière à obtenir un signal numérique de génération d'erreurs par lecture de ces deuxièmes moyens de mémorisation,
- des moyens de commande aptes à commander des opérations de lecture et d'écriture des deuxièmes moyens de mémorisation,
- des moyens de génération d'erreurs cellules recevant le signal numérique de génération d'erreurs et générant des erreurs cellules dans le signal incident en fonction du signal numérique reçu.

Les moyens de génération de gigue comportent:

- des moyens de mémorisation d'une consigne de gigue, préalablement établie;
- des moyens de mesure de l'écart entre cellules relatives à une même communication;
- des moyens d'aiguillage des cellules incidentes selon qu'elles sont relatives à la même communication ou non;
- des moyens de commande permettant de modifier ou non l'écart entre cellules relatives à une même communication.

D'autres particularités et avantages de l'invention apparaîtront à la lecture de la description détaillée qui est faite à titre illustratif et non-limitatif et en regard des dessins annexés sur lesquels:

- la figure 1, représente un schéma général du simulateur conforme à l'invention;
- la figure 2, représente un schéma détaillé des moyens de raccordement réception R et des moyens de raccordement émission E;
- la figure 3, représente un schéma de réalisation pratique du générateur de cellule selon la figure 2;
- la figure 4, représente un schéma de réalisation des moyens de génération d'erreurs binaires;
- la figure 5, représente un schéma général de réalisation des moyens de génération d'erreurs cellules;
- la figure 6, représente un schéma détaillé de réalisation du dispositif de la figure 5;
- la figure 7, représente un schéma général de réalisation des moyens de génération de gigue;
- la figure 8, représente un schéma plus détaillé de réalisation du dispositif de la figure 7;
- la figure 9, représente un diagramme illustrant le stockage des cellules et le comptage;
- la figure 10, représente le schéma de déroulement de la génération de gigue selon un exemple de réalisation pratique.

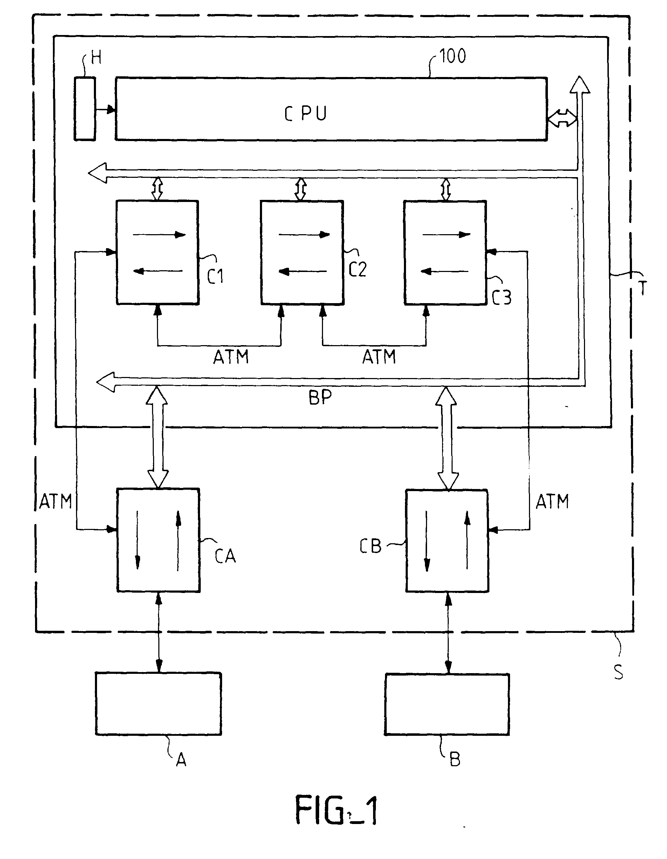

Le simulateur conforme à l'invention et qui va être décrit d'une manière fonctionnelle à partir du schéma de principe de la figure 1 et d'une manière plus détaillée à partir de l'ensemble des autres figures, comporte deux parties distinctes, 1) une partie raccordement et 2) une partie traitement.

## 1) - RACCORDEMENT

La partie raccordement permet d'assurer le raccordement entre un terminal A et le simulateur S et entre un terminal B et ce simulateur.

Cette partie raccordement est réalisée par deux ensembles interface se présentant sous la forme de cartes électroniques CA et CB. Chaque interface permet des accès dans les deux sens tel que le montrent les flèches, c'est-à-dire du terminal A vers le terminal B et inversement, du terminal B vers le terminal A.

## 2) - TRAITEMENT

La partie traitement T comporte principalement des moyens de commande 100 réalisés par une unité centrale de traitement et de commande CPU comprenant un microprocesseur muni de tous ses circuits périphériques habituels, interfaces, mémoires RAM, mémoires ROM.

Cette partie traitement T comprend en outre des moyens de génération d'erreur réalisés par trois cartes électroniques C1, C2, C3.

On a désigné par C1 la carte qui permet de générer des erreurs binaires, par C2, la carte qui permet de générer des erreurs cellules et par C3, la carte qui permet de générer des erreurs gigue.

Toutes les cartes sont reliées à l'unité 100 par un bus processeur BP et elles sont également reliées entre elles par une liaison type bus correspondant à ce que l'on appellera dans la suite bus ATM. Il s'agit du signal généré par les cartes de raccordement CA ou CB, signal qui est multiplexé ou non avec un signal reçu d'un des terminaux A ou B.

Le bus ATM traverse chaque carte et les informations qu'il transporte peuvent très bien n'avoir fait l'objet d'aucun traitement à l'intérieur d'une ou de plusieurs cartes de génération d'erreurs sur commande d'inactivation des circuits de ces cartes par l'unité 100.

Ainsi, l'unité 100 est apte à fournir un signal d'activation ou d'inactivation des circuits de chaque carte C1, C2, C3 par le bus BP d'adresse, de données et de commande. Les informations transportées par le bus ATM sont alors transmises à la carte suivante sans modification.

Toutes les cartes sont synchronisées sur une fréquence d'horloge H de 19,44 MHz soit une fréquence bit pour le bus ATM de 155,52 Hz fournie par une horloge H à l'unité 100.

## RACCORDEMENT :

## INTERFACE LIGNE-EMISSION - RECEPTION/ADAPTATION DE RYTHME/GENERATEUR DE CELLULES.

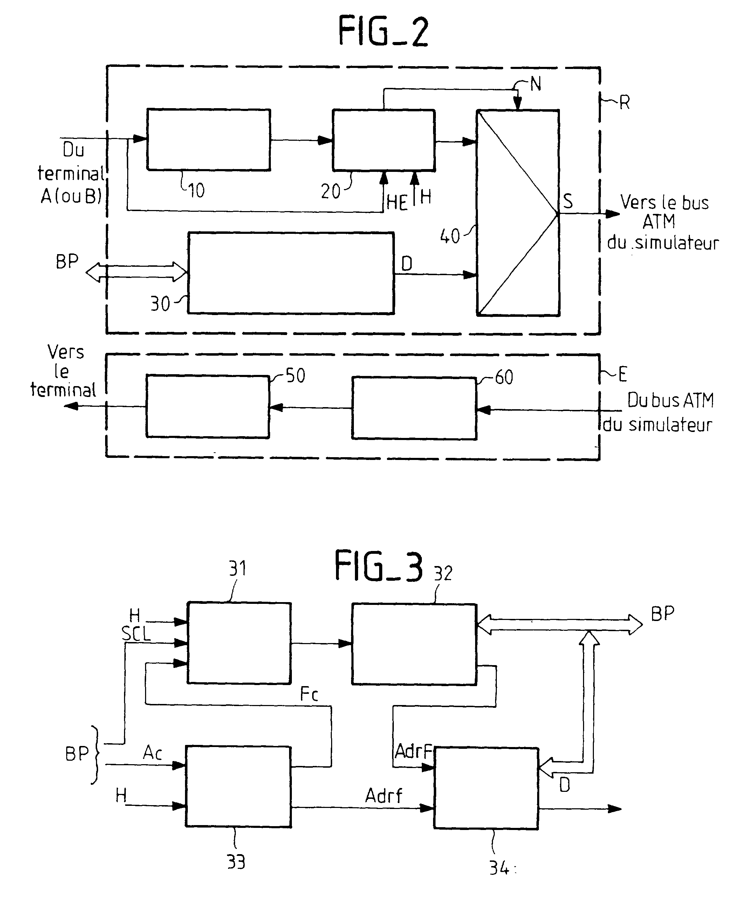

Sur la figure 2 on a représenté les détails de réalisation d'une carte de raccordement CA ou CB selon l'invention.

La carte comporte une partie que l'on qualifiera dans la suite de réception R pour signifier qu'il s'agit du raccordement dans le sens terminal vers simulateur.

La partie réception R comporte une interface ligne réception 10 permettant une liaison parallèle sur 8 fils par exemple et classique en soi, suivie d'un adaptateur de rythme ou file d'attente 20 du type pile FIFO pour adapter le rythme des cellules d'informations reçues par l'interface 10 et fournies par un terminal, avec celui du simulateur. Pour cela l'écriture dans la pile se fait au rythme de l'horloge interne H.

La partie R comporte également un multiplexeur 40 et un générateur 30.

Dans le cas ou le simulateur n'est pas en liaison réception avec un terminal le flux sortant S de la partie réception R est fourni uniquement par le générateur 30. Dans le cas contraire, le flux sortant résulte d'un multiplexage entre les cellules générées par le générateur et les cellules disponibles dans la file d'attente 20. Dès qu'une cellule complète (53 octets) est présente dans la file d'attente 20, elle est aiguillée via le multiplexeur sur commande du signal N de remplissage de la file d'attente 20.

La partie émission E comporte un circuit 60 de reconnaissance d'en-tête des cellules qu'il reçoit du bus ATM du simulateur destinées au terminal de réception.

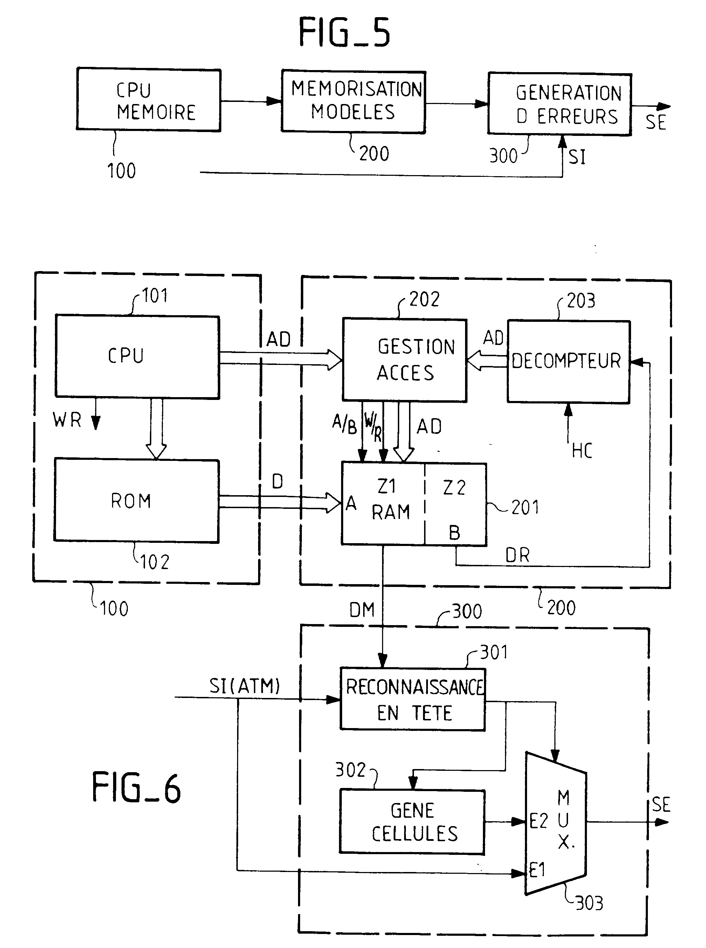

Le circuit 60 est semblable au circuit 301 qui sera détaillé dans la suite de la description à propos de la figure 6. Une interface ligne émission 50 reçoit les cellules destinées au terminal de réception et les transmet à ce terminal. L'interface 50, classique en soi, est apte à transmettre les cellules octets par octets, en parallèle sur 8 fils.

On va maintenant détailler un exemple de réalisation préféré pour le générateur de cellule 30. Ce générateur 30 comporte des moyens de mémorisation des cellules à générer. Ces moyens sont programmés par l'unité 100 de manière à pouvoir obtenir une séquence d'une taille de 32768 cellules, la séquence pouvant être renouvelée en recommençant des cycles de lecture.

De manière préférentielle, pour minimiser la taille mémoire nécessaire, on utilise deux mémoires. Une mémoire 34 mémorise le contenu des cellules, soit selon cet exemple, 128 x 53 octets. L'autre mémoire 32 contient un ensemble de numéros correspondant à des numéros de cellules que l'on désire générer parmi les 128 cellules mémorisées dans la mémoire 34. La mémoire 32 correspond à une mémoire d'index permettant d'avoir ainsi au moins une séquence de 32768 cellules.

Les mémoires sont pilotées par une base de temps. La base de temps comporte un compteur octet 33 qui est un compteur par 53 et qui adresse les poids faibles Adrf de la mémoire de contenu 34. Cette base de temps comporte en outre, un compteur cellule 31 qui est un compteur par 32768 incrémenté à chaque cellule par un signal Fc et qui adresse les poids forts Adrf. Ce compteur peut ou non être bloqué sur une adresse ADR donnée par la commande de bouclage BCL du bus BP. Lorsqu'il est bloqué à une adresse, c'est la même cellule adressée qui va être émise continuellement jusqu'à interruption de ce signal. Lorsque le compteur n'est pas bloqué, l'émission des cellules se fait selon la séquence programmée dans la mémoire d'index 32.

L'incrémentation du compteur 31 se fait par une sortie du compteur octet 33 qui indique la fin d'une cellule Fc. Le compteur 33 est activé par un signal AC formé par le bus BP pour démarrer une séquence de génération de cellules.

## TRAITEMENT

### ERREURS BINAIRES/ERREURS CELLULES/ERREURS GIGUE

La suite de la description va porter maintenant sur les différentes cartes de génération d'erreur.

Selon l'invention, l'unité 100 est programmée de manière à commander, au moyen de son bus BP d'adresse, de données et de commande, les différents circuits tel que cela a été décrit à propos des cartes CA et CB et tel que cela va être décrit à propos des cartes C1, C2, C3 et ainsi mettre en oeuvre le procédé de simulation décrit.

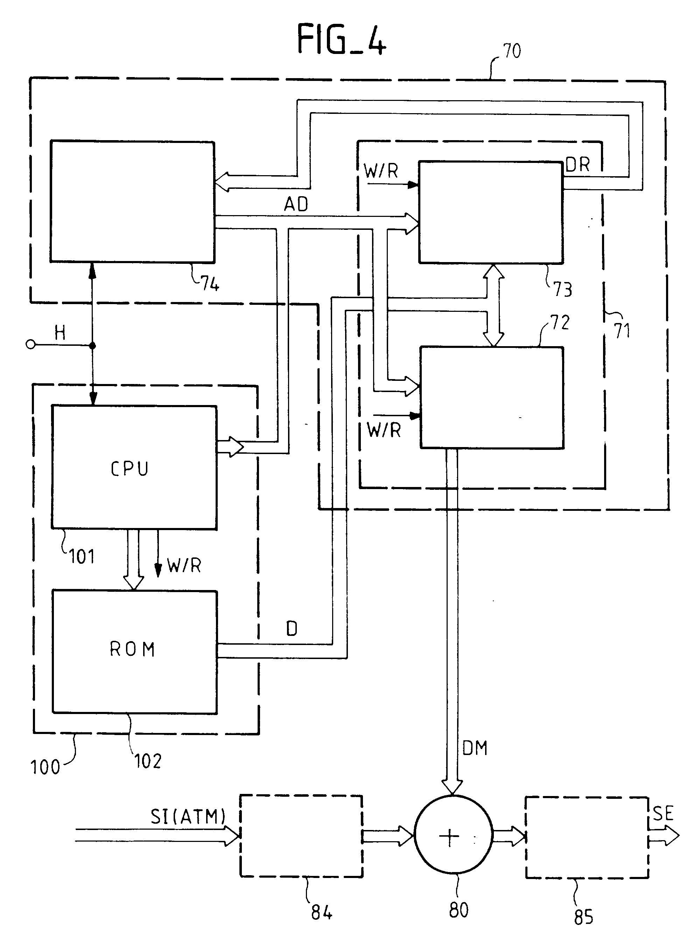

Sur la figure 4, on a représenté un schéma de réalisation de génération d'erreurs binaires tel que réalisée par la carte C1. En pratique, les ensembles 70, 80, 84 et 85 sont doublés pour pouvoir assurer une simulation de transmission bidirectionnelle. De façon pratique également, l'unité de pilotage des moyens 70 est réalisée par l'unité centrale de traitement représentée sur la figure 1, c'est pourquoi elle porte la même référence.

Sur la figure 5 (ou 6), on a représenté un schéma de réalisation de génération d'erreurs cellules tel que réalisé par la carte C2. De la même façon pratique, les ensembles 200 et 300 sont doublés pour les mêmes raisons énoncées précédemment. De façon pratique également, l'unité de pilotage des moyens 200 est réalisée par l'unité centrale de traitement représentée sur la figure 1.

Le signal incident dans chaque carte est dénommé SI, il s'agit du signal transporté par le bus ATM représenté sur la figure 1.

### GENERATEUR D'ERREURS BINAIRES

La figure 4 représente un schéma de réalisation du dispositif de génération d'erreurs binaires selon l'invention. Ce dispositif comporte des moyens de mémorisation 70 commandés en lecture et écriture par l'unité de commande 100 qui comporte de manière plus précise une unité centrale de traitement 101. Cette unité 101 est associée à des moyens de mémorisation de programmes et de données 102 afin d'obtenir la génération d'erreurs binaires comme cela va être décrit dans la suite.

Selon l'invention on enregistre au préalable dans ces moyens de mémorisation, un ou plusieurs modèles de génération d'erreurs.

Chaque modèle enregistré est défini par une loi mathématique connue. On peut citer à ce titre une loi telle que la loi de Poisson. Les modèles enregistrés peuvent aussi être le résultat de mesure effectuées lors de transmissions réelles sur les différents réseaux.

On dispose ainsi de modèles relatifs au réseau de transmission. Pour procéder à la génération d'erreurs binaires sur le signal incident SI de format et de débit correspondant à celui d'une transmission sur un réseau donné, on charge le modèle d'erreurs correspondant à la transmission sur ce réseau dans les moyens de mémorisation 70. Le chargement est réalisé par l'unité centrale de traitement qui commande pour cela l'écriture du modèle dans ces moyens de mémorisation et qui commande ensuite la lecture du modèle enregistré au rythme d'arrivée des données du signal incident.

Les données lues dans les moyens de mémorisation, au rythme du signal incident SI, sont combinées de manière à fournir un signal SE reproduisant les caractéristiques de transmission du réseau choisi.

Un tel signal SE permet en effet de simuler une transmission sur ce réseau.

La combinaison des deux signaux consiste à inverser des éléments binaires du signal incident SI quand les éléments binaires du signal de génération d'erreurs DM sont actifs.

En effet le modèle chargé dans les moyens de mémorisation de génération d'erreurs 70 se présente sous la forme d'éléments binaires se trouvant à l'état logique 0 ou 1 selon la convention adoptée pour obtenir une erreur ou pas d'erreur sur le signal incident.

Selon la convention adoptée dans la réalisation pratique on a choisi de mémoriser un zéro lorsque l'on ne veut pas générer d'erreur et de mémoriser un 1 lorsque l'on veut générer une erreur.

On rappelle ici que le taux d'erreurs sur des réseaux de transmission est généralement faible de l'ordre de $10^{-10}$. Même dans le cas où l'on prend un taux d'erreur de $10^{-6}$, ce qui est considéré comme excessif, cela se traduit par un million de bit à zéro dans la mémoire puis 1 bit à 1 et ainsi de suite si le modèle est récurant. La taille mémoire requise peut donc être considérable.

Ainsi de façon préférentielle, pour éviter d'avoir à utiliser une mémoire de très grande capacité pour la mémorisation du modèle qui va être lu au rythme du signal incident, on utilise un codage donnant deux types d'informations. On a représenté, pour faciliter la compréhension, ces informations par deux zones mémoire distinctes sur la figure 4. Bien entendu, ces informations peuvent être sur un seul composant mémoire.

Le premier type d'information est constitué de mots correspondants à des motifs d'erreurs et l'autre à la distance entre les erreurs. Ainsi au lieu de stocker un motif d'erreur 0 ou 1 correspondant à chaque bit du train incident on a choisi de coder le nombre de fois que va être répété un motif d'erreur, le motif d'erreur valant 0 lorsqu'il n'y a pas d'erreur selon la convention qui a été prise. De longues séquences sans erreur peuvent ainsi être codées avec beaucoup moins de bits.

Comme cela a été expliqué ci-dessus, les moyens de mémorisation 70 comportent une mémoire 71 comprenant une zone mémoire de motif 72 et une zone mémoire de répétition 73. Ces moyens comportent en outre, un compteur d'adresse 74 prévu pour adresser en lecture les mémoires 72 et 73 par le bus d'adresse AD.

Selon un exemple de réalisation pratique les modèles se présentent sous la forme d'un ensemble de motifs d'erreurs correspondant à des mots de 8 bits. A chaque motif d'erreur correspond un mot de 16 bits permettant de coder le nombre de fois que le motif associé doit être répété lors de la génération d'erreurs.

Un bus de donnée D permet de charger la mémoire de motifs d'erreurs 72, des données DM et la mémoire de répétition 73 des données issues de la mémoire 102. L'unité centrale donne pour cela un ordre d'écriture dans ces mémoires au moyen du signal de commande W/R. L'adressage des mémoires 72 et 73 pendant l'écriture est réalisé par l'unité centrale au moyen du bus d'adresse AD.

En revanche l'adressage des mémoires 72 et 73 pour une lecture est réalisé par le compteur 74 au moyen du bus d'adresse AD sur commande également du signal W/R.

Le compteur 74 est piloté par l'horloge H correspondant au rythme d'arrivée des données du signal incident SI. A l'initialisation le compteur est pointé à la première adresse des mémoires 72 et 73 et est chargé par la valeur contenue à la première adresse de la mémoire de répétition 73. Le compteur reste à cette adresse jusqu'à ce que la valeur chargée dans ce compteur revienne par décrémentation à la position initiale du compteur. Le compteur passe alors à l'adresse suivante.

Ainsi, le mot mémorisé à une adresse donnée dans la mémoire 72, est répété autant de fois que l'indique la valeur mémorisée dans la mémoire 73 à l'adresse pointée par le compteur. Le compteur passe à l'adresse suivante dès qu'il se retrouve à sa position initiale. Les mots DM lus dans la mémoire 72 sont combinés au signal incident SI à la cadence d'arrivée de ce signal et permettent d'obtenir un signal SE ayant les caractéristiques d'un signal transmis par un réseau de transmission donné.

La combinaison du signal SI et des motifs d'erreur DM est obtenu par une porte logique 80 du type OU exclusif qui permet d'inverser des bits de ce signal quand les bits d'erreur sont actifs.

A titre d'exemple, si l'on dispose, pour réaliser les mémoires 72 et 73, d'un composant mémoire organisé en 256 kmots de 4 bits, cela conduit à disposer d'une mémoire d'erreur de 256 kmots de 24 bits, la répétition étant codée sur 16 bits et les motifs d'erreur sur 8 bits.

Une telle configuration permet d'atteindre un taux d'erreur minimum de $7,3 \cdot 10^{-12}$ soit une période de répétition de 15 minutes environ et cela dans des conditions optimales c'est à dire pour une seule erreur dans le flux.

Pour un modèle d'erreur plus complexe, on peut par exemple envisager un modèle d'erreur avec $10^{10}$ bits sans erreur puis 4 erreurs consécutives puis 100 bits corrects puis $10^5$ bits avec un taux d'erreur moyen de $10^{-3}$. Une telle séquence occupera environ 19300 mots en mémoire sur les 262144 disponibles ($256 \times 1024$ mots). Sans codage de la distance entre deux erreurs comme cela vient d'être décrit un tel modèle occuperait environ $1,25 \cdot 10^6$ octets de mémoire.

Ce dispositif permet de générer une séquence d'une taille maximale de $1,37 \cdot 10^{11}$ bits avec une mémoire limitée à $6,3 \cdot 10^6$ bits de mémoire.

On a représenté sur cette même figure en trait pointillé, une variante de réalisation du dispositif conforme à l'invention. Cette variante, permet de s'approcher au mieux d'une transmission en mode ATM et permet de ce fait de simuler au mieux une transmission sur réseau ATM.

Pour cela, le dispositif comporte en outre, des moyens de génération d'un code correcteur d'erreurs 84 placés en amont des moyens de combinaison 80 et il comporte également des moyens de décodage 85 de ce code de correction d'erreurs placé en aval de ces moyens 80.

Ainsi les moyens de génération du code correcteur d'erreurs 84 vont permettre de protéger grâce à ce code les octets de l'en-tête des cellules du signal incident de format ATM tel que préconisé par la norme ATM.

Ce code va par conséquent permettre de corriger les erreurs qui peuvent être générées à partir du dispositif sur l'en-tête des cellules.

Pour répondre à la norme ATM cette correction n'est faite que sur une seule erreur par en-tête. Lorsque plus d'une erreur est détectée par les moyens de décodage du code correcteur d'erreurs la cellule est détruite comme cela est préconisée par la norme ATM.

Les circuits utilisés pour réaliser la génération du code correcteur d'erreurs et le décodage de ce code correcteur d'erreurs sont des circuits que l'on peut trouver dans le commerce.

A titre d'exemple de réalisation pratique on pourra prendre par exemple un circuit Xilinx (3020PC68) pour réaliser la génération du code correcteur d'erreur et un circuit Xilinx (3042PG132) pour réaliser le décodage du code correcteur d'erreurs.

A titre d'exemple également les moyens de mémorisation 10 peuvent être réalisés par une mémoire de type RAM vidéo. Le port données parallèles est utilisé par l'unité centrale de traitement pour les accès en écriture et le port série est utilisé comme accès en lecture seule pour la sortie des données au rythme du bus ATM.

GENERATION D'ERREURS CELLULES

La figure 5 représente le schéma de principe du dispositif de génération d'erreur cellules conforme à l'invention. Ce dispositif est commandé par l'unité 100, Il comporte une unité programmable de mémorisation du modèle désiré 200 et une unité programmable de génération d'erreurs cellules proprement dite 300.

Le signal incident dans lequel des erreurs cellules vont être générées est reçu par le générateur 300, et comporte des cellules affectées à une communication. Ces cellules peuvent être des cellules "vides" ou des cellules de données, la différenciation se faisant par leur en-tête.

Différents modèles d'erreurs ont été préalablement enregistrés et mémorisés dans l'unité 100. Pour générer des erreurs sur le signal incident, on choisit le modèle que l'on désire utiliser et on le charge dans l'unité de mémorisation 200.

Cette unité 200 transmet, au rythme d'arrivée des cellules du signal incident, un signal numérique indiquant au générateur 300 si une erreur cellule doit être générée ou non et la nature de l'erreur. Les erreurs générées sont de deux types: soit une perte de cellule, soit une insertion.

Lors d'une perte de cellules, la communication concernée ne reçoit pas l'information contenue dans la cellule perdue.

Lors d'une insertion à tort de cellule, la communication concernée reçoit des données qui ne lui étaient pas destinées.

Plus de détails vont être donnés dans la suite sur le procédé conforme à l'invention à partir du schéma de réalisation préférée du dispositif, représenté sur la figure 6.

Comme cela a été dit des modèles d'erreurs cellules ont été préalablement enregistrés. Ces modèles ont été par exemple obtenus par une loi mathématique connue. On peut citer à titre d'exemple une loi telle que la loi de Poisson. Les modèles enregistrés peuvent aussi être le résultat de mesure effectuées lors de transmissions réelles sur des réseaux.

On dispose ainsi de différents modèles d'erreurs permettant de caractériser une transmission sur un réseau ATM.

Pour procéder à la génération d'erreurs cellules sur un signal incident SI de format et de débit correspondant à celui d'une transmission sur un réseau ATM, on charge le modèle d'erreurs choisi dans la mémoire d'erreur 201.

Il s'agit d'une mémoire programmable à lecture et écriture de type mémoire RAM dynamique.

Selon un mode préféré de réalisation, afin d'obtenir pour la sortie, des données au rythme de bus ATM, cette mémoire est une mémoire RAM vidéo. On lui a associé une circuit de gestion 202 pour gérer ses accès en lecture/écriture. On rappelle à ce propos qu'une mémoire RAM vidéo comporte un port parallèle et un port série.

Dans cette réalisation, les modèles ont été préalablement enregistrés dans une mémoire 102 à lecture de type ROM et sont chargés dans la mémoire 201 à partir du port parallèle A de cette mémoire.

Les données ainsi mémorisées dans cette mémoire sont lues au rythme du bus ATM et accessibles en sortie sur son port série B.

Le circuit 202 de gestion des accès et d'adressage de la mémoire 201 reçoit des signaux de commande d'adressage de l'unité centrale de traitement 101, au moment du chargement des modèles, par le bus de données D.

La mémoire 201 est chargée de motifs d'erreurs se présentant sous la forme des mots indiquant d'une part la cadence d'apparition des erreurs et d'autre part la nature des erreurs.

En pratique, ces mots comportent un bit dont la valeur indique qu'il faut générer une cellule avec ou sans erreur. Ce bit vaut par exemple O pour indiquer qu'il n'y a pas d'erreur et 1 pour indiquer qu'il y a une erreur. Ces mots comportent en outre 1 bit pour indiquer la nature de l'erreur c'est à dire s'il s'agit d'une insertion ou d'une perte de cellule.

Pour obtenir un taux d'erreur de l'ordre de $10^{-8}$ avec un débit en ligne de 155 Mbit/s il est nécessaire d'avoir une mémoire d'erreurs d'une capacité de 10 Mega-octets.

Pour éviter d'avoir à utiliser une telle capacité mémoire, le procédé consiste à coder le modèle d'erreur sous la forme de motifs d'erreurs auxquels on associe un mot indiquant le nombre de fois que le motif doit être répété, ce mot étant, par conséquent, le facteur de répétition du motif.

De longues séquences sans erreur peuvent ainsi être codées avec beaucoup moins de bits.

En conséquence la mémoire d'erreurs contient des motifs correspondant à l'information "pas d'erreur" avec associé à ces motifs un facteur de répétition du motif. La mémoire contient également des motifs correspondant à l'information "erreur" avec associé à ces motifs un facteur de répétition du motif.

Les facteurs de répétition des motifs sans erreurs ont une valeur qui est très supérieure aux facteurs de répétition des motifs avec erreur. On comprend, que le codage du facteur de répétition doit tenir compte de cette contrainte.

Selon un exemple de réalisation préféré on a choisi de coder le facteur de répétition sur 14 bits de manière à pouvoir répéter ces motifs de 1 à 16384 fois, ce qui représente un ordre de grandeur acceptable.

La mémoire d'erreur 201 permet par conséquent d'obtenir en sortie les motifs d'erreurs DM qui sont appliqués à une entrée du circuit d'erreur 300, ainsi que le facteur de répétition DR lu avec le motif d'erreur associé et qui est appliqué à l'entrée d'un décompteur 203. Pour simplifier la compréhension, on peut dire que ces motifs DM sont mémorisés dans une zone Z1 de la mémoire et que les motifs DR sont mémorisés dans une zone Z2 de cette mémoire.

Le décompteur 203 est piloté par une horloge externe Hc correspondant au rythme d'arrivée des cellules du signal incident SI.

A l'initialisation le décompteur est à une valeur qui lui permet d'obtenir la première adresse de la mémoire 201 et de rester à cette adresse jusqu'à ce que la valeur chargée dans ce compteur revienne à la position initiale.

Le décompteur 203 passe à l'adresse suivante dès qu'il retrouve sa valeur initiale.

La génération d'erreur proprement dite va être détaillée dans ce qui suit.

Les modèles qui ont été établis permettent de déterminer à quel moment il faut générer une erreur dans le bus ATM incident et quelle est la nature de l'erreur (perte ou insertion d'une cellule). Le circuit d'erreur 300 permet d'agir sur les cellules incidentes du bus ATM pour y insérer des erreurs lorsque le modèle l'indique.

Pour cela, le circuit 300 comprend un circuit de reconnaissance d'en-tête 301, un circuit de génération de cellules de remplacement 302 et un multiplexeur 303.

Le circuit 301 filtre les en-têtes de cellules à affecter. Le circuit 302 génère un défaut sur les cellules filtrées par le circuit 301. Le défaut consiste à modifier l'en-tête de la cellule filtrée.

Le bus ATM transporte des cellules d'information. Dans le cas ou il n'y a pas d'information à transmettre, on utilise des cellules spéciales, appelées cellules vides, identifiées par leur en-tête.

Les circuits 301 et 302 comportent des moyens de mémorisation dans lesquels l'en-tête d'une cellule vide et l'en-tête de la communication à affecter sont mémorisées.

Pour générer des pertes de cellules, le circuit 301 filtre l'en-tête de la communication à affecter, et le circuit générateur 302 introduit l'en-tête d'une cellule vide dans cette cellule. Ainsi, une cellule valide est remplacée par une cellule vide, ce qui revient à une perte de cellule pour la communication affectée.

Pour générer une insertion de cellule, le circuit 301 filtre l'en-tête d'une cellule vide, le circuit 302 remplace cette en-tête avec celle de la communication à affecter. Dans ce cas le circuit 302 remplace une cellule vide par une cellule valide. Cependant l'information contenue dans la cellule reste celle de la cellule vide d'origine.

Le multiplexeur 303 permet de sélectionner en sortie soit une cellule incidente présente à l'entrée E1 soit une cellule générée présente à l'entrée E2.

La sortie du multiplexeur fournit le signal ATM dans lesquels des erreurs cellules ont été générées.

A titre d'exemple dans une réalisation pratique de l'invention on a utilisé une mémoire RAM vidéo pour la mémoire 201, un circuit programmable Xilinx pour réaliser les fonctions de circuits 202 et 203. On a également utilisé deux autres circuits programmables Xilinx pour réaliser les fonctions des circuits 301 et 302.

## GENERATION GIGUE

Une communication en mode ATM consiste à envoyer des cellules dont l'identité est connue, à partir d'un terminal ATM vers un ou plusieurs autres terminaux, éventuellement en recevoir, ceci après échange de signalisation. Cette communication se fait au travers d'un réseau constitué d'un ou plusieurs noeuds de commutations propre à l'ATM susceptibles d'être saturés. C'est pourquoi on prévoit des files d'attente à chaque noeud.

Le temps mis par une cellule pour traverser le réseau varie en fonction du nombre de noeuds traversés et de la charge de ceux-ci. Cette variation du temps de traversée du réseau se traduit par un écart entre les cellules à l'arrivée différent de l'écart origine, c'est ce que l'on entend par gigue, on parlera dans la suite de gigue cellule ou de cellules giguées.

En mode ATM, un terminal raccordé au réseau voit arriver un flux de cellules sur le réseau ATM auquel il est raccordé, issues d'une ou plusieurs sources d'émission. Ce flux est constitué notamment de cellules destinées à ce terminal. Le terminal est apte à sélectionner les cellules qui lui sont destinées par lecture de leur en-tête. On qualifiera ces cellules dans la suite, de cellules relatives à une même communication.

La gigue a donc pour effet de modifier la distribution temporelle des cellules émises au départ d'un terminal d'émission. A l'arrivée dans le terminal de réception, l'ordre des cellules est respecté mais n'a plus la même distribution. La gigue induit par exemple une rafale de cellules concernant le terminal de réception suivi d'un nombre X de cellules étrangères destinées à d'autres terminaux.

La gigue a des incidences sur le dimensionnement des terminaux ATM.

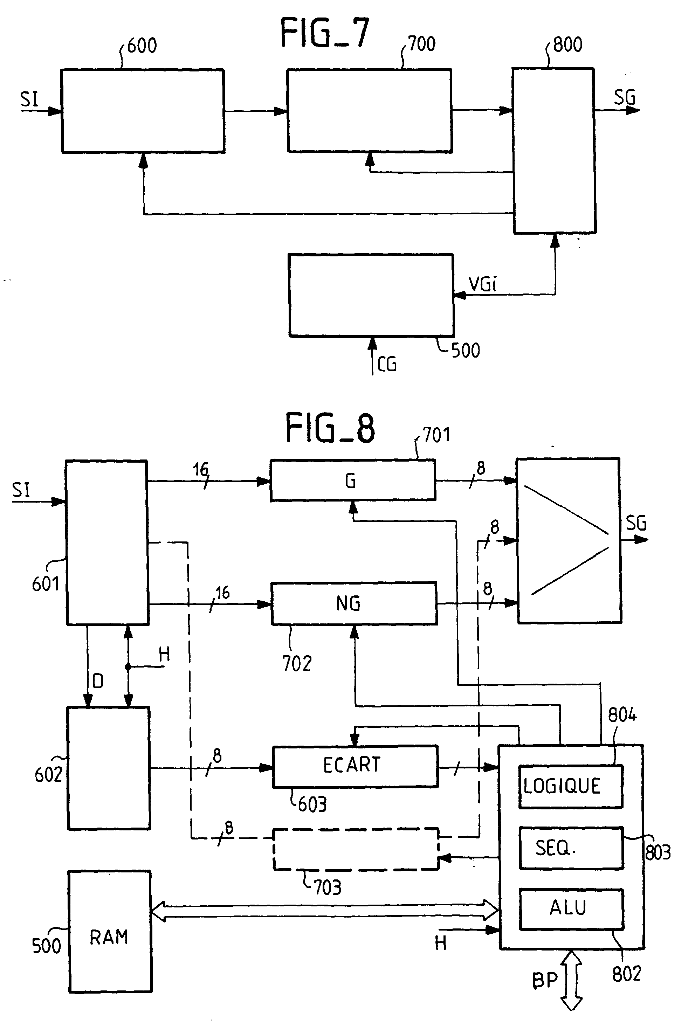

La figure 7 représente un schéma de principe du dispositif de génération de gigue cellule selon l'invention.

Dans toute la suite de la description on parlera de cellules giguées que l'on notera G pour les cellules relatives à une même communication. Les cellules G seront par conséquent les cellules de la communication affectée par la gigue introduite selon l'invention. Les cellules autres seront notées NG pour indiquer qu'il s'agit de cellules appartenant à des communications non affectées par la gigue.

Le dispositif comprend une unité de mémorisation 500 qui permet de programmer une consigne de gigue CG préalablement établie à partir soit de mesures effectuées sur une liaison de transmission en mode ATM soit à partir d'une loi mathématique donnée reflétant au mieux le phénomène de gigue sur une transmission en mode ATM.

Une unité de commande 800 est prévue pour commander la lecture de la consigne dans l'unité 500 et commander la génération d'un signal SG présentant des écarts variables entre cellules ou non selon le signal de la consigne.

Le flux de sortie SG du dispositif est identique au flux d'arrivée SI lorsque l'écart entre cellules reste le même en entrée qu'en sortie. Le flux de sortie est différent lorsque l'écart entre cellules a été modifié par rapport à l'écart du flux d'entrée.

L'écart entre cellules du flux d'arrivée SI est mesuré par une unité 600.

Après mesure de cet écart, les cellules G relatives à la communication concernée sont séparées des cellules autres NG. Cette séparation ou aiguillage est réalisée par l'unité 700.

L'unité de commande 800 permet de piloter l'ensemble des opérations réalisées par les unités 500, 600 et 700 pour ensuite modifier l'écart entre cellules de la communication concernée en réinsérant le même nombre de cellules NG (des communications autres) entre deux cellules G ou un nombre différent de celui-ci.

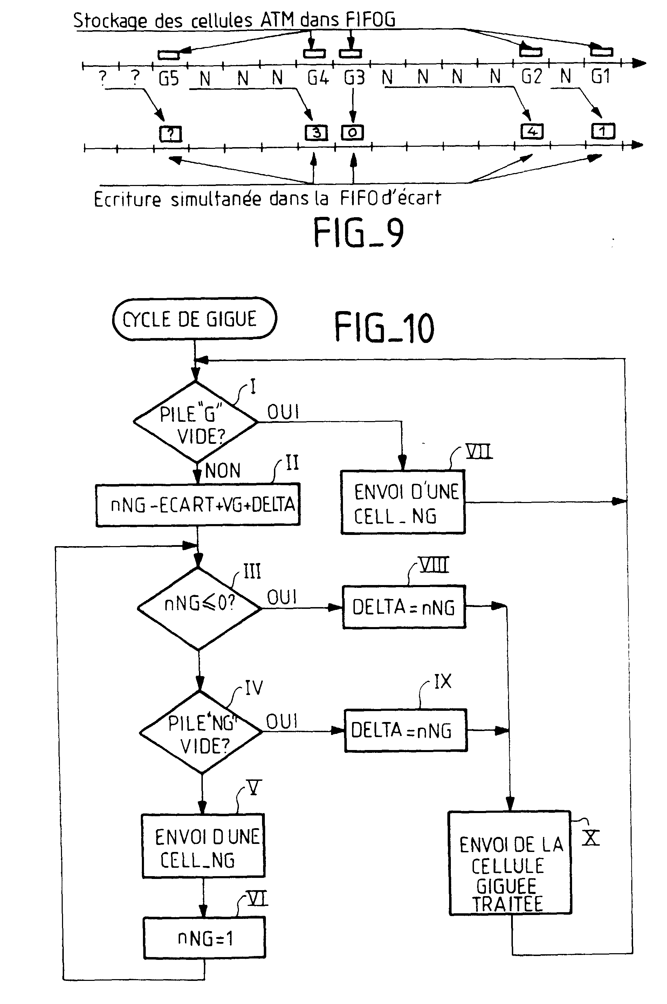

Un exemple de réalisation non limitatif va être décrit dans la suite à partir de la figure 8. Selon cet exemple, l'unité 500 est réalisée par une mémoire à lecture et écriture de type RAM. Cette mémoire est donc chargée par un modèle de consigne CG désiré et modifiable. L'unité 600 est réalisée par un circuit 601 de détection des en-têtes des cellules permettant d'identifier les cellules G relatives à la communication concernée et les autres cellules NG.

Cette unité 600 comprend également, associé à ce circuit 601, un circuit 602 de comptage d'écart cellules et une file d'attente 603 réalisée par piles de stockage de type FIFO afin de stocker les écarts obtenus à la sortie du compteur 602.

L'unité d'aiguillage 700 comporte, selon cet exemple de réalisation, une file d'attente 701 réalisée par piles de stockage de type pile FIFO permettant de stocker les cellules G relatives à la communication affectée, identifiées par le circuit 601.

Cette unité 700 comporte également une file d'attente 702 réalisée par piles de stockage de type pile FIFO permettant de stocker les cellules NG de communications autres.

L'unité de commande 800 permet de procéder à la génération de gigue suivant les étapes qui vont être décrites dans la suite et sur commande de l'unité 100.

L'unité 800 comporte pour cela un multiplexeur 805, une unité arithmétique et logique 802, un séquenceur 803 et une logique de commande 804 de manière à gérer l'adressage des piles de stockage, le comptage des écarts et, l'insertion ou la retenue de cellules entre les cellules de la communication affectée par la gigue.

Le déroulement de l'ensemble des opérations pilotées par l'unité centrale 100 au moyen de l'unité arithmétique et logique 802, du séquenceur 803 et de la logique de commande 804 pour obtenir un cycle de gigue est illustré par l'organigramme de la figure 10.

Tous ces ensembles sont synchronisés sur le signal d'horloge H, centré sur l'en-tête des cellules et correspondant au rythme d'arrivée des cellules.

Le détecteur d'en-tête 601 est synchronisé sur l'horloge H correspondant au rythme d'arrivée des cellules. Ce circuit est par exemple réalisé par un circuit programmable Xilinx dans lequel l'en-tête des cellules de la communication affectée a été programmé. Ce circuit réalise la comparaison des en-têtes des cellules incidentes au rythme de leur arrivée, à l'en-tête programmé et, transmet la cellule à l'ensemble 701 ou 702 selon les résultats de la comparaison.

Le compteur 602 est activé par un signal de détection D de cellules délivré par le circuit 601.

Le stockage des cellules dans la pile FIFO 701 se fait simultanément au stockage dans la pile 603 de l'écart mesuré associé à chaque cellule tel que cela a été illustré par l'exemple donné sur le diagramme de la figure 9.

Sur ce diagramme l'écart entre les cellules G1 et G2 est égal à 1, cette valeur d'écart "1" est affectée à la cellule G1. L'écart entre G2 et G3 est 4, 4 est affecté à la cellule G3. L'écart entre G3 et G4 est 0, 0 est affecté à G3.

La consigne programmée consiste par conséquent à mémoriser des mots indiquant des valeurs d'écart obéissant à une loi de programmation donnée.

Pour obtenir une cellule de plus entre deux cellules G la consigne sera égale à +1. Pour obtenir une cellule de moins, la consigne sera égale à -1.

Pour n'obtenir aucun changement, la consigne sera égale à O.

L'unité de séquencement commande la lecture d'une valeur de consigne $VG_i$ puis $VG_{i+1}$ pour mettre en oeuvre le cycle de génération de gigue sur la cellule $G_i$ puis $G_{i+1}$.

Ainsi, pour giguer les cellules G, le dispositif va insérer un nombre variable de cellules NG entre deux cellules G.

On va dans la suite, désigner par :

VG :          la valeur gigue (ou consigne);

ECART :    l'écart séparant deux cellules G, il représente donc le nombre de cellules non giguées dans le flux d'entrée;

DELTA :    le reliquat de gigue à terminer sur la cellule suivante dans le cas d'une impossibilité de réalisation du calcul;

nNG :  le nombre de cellules non giguées NG à envoyer avant de sortir la cellule giguée G faisant l'objet du calcul.

L'unité arithmétique réalise le calcul suivant:

$$nNG = ECART + VG + DELTA$$

la valeur DELTA représente une retenue dans le calcul lorsque nNG est négatif.

Selon un exemple de réalisation pratique, la valeur maximum du paramètre ECART est fixée à 4095 (cellules).

Pour traiter une cellule $G_i$, on lit les paramètres ECART et $VG_i$ concernant cette cellule, ainsi que le paramètre DELTA résultant du calcul précédent.

Si nNG > 0, la gigue est positive, le déroulement du cycle pour la cellule peut commencer. Les moyens de commande séquencent la sortie d'un nombre de cellules NG correspondant au nombre nNG puis la sortie de la cellule $G_i$.

Si nNG < 0, il y a impossibilité. On force alors DELTA à la valeur nNG et la cellule $G_i$ est envoyée tout de suite.

Pour éviter d'avoir à lire une pile vide, on prévoit de réaliser un test sur la pile de cellules NG dans la boucle de vidage du nombre nNG de cellules. Ce test se déroule immédiatement après l'envoi d'une cellule NG. Dans le cas ou la pile NG est vide, on envoie la cellule giguée "en avance" et le nombre de cellules NG restant à sortir est reporté dans la valeur DELTA.

L'ensemble des étapes I à X mentionnées sur la figure 10, correspondent aux différentes opérations effectuées pour un cycle de gigue venant d'être détaillé.

On va maintenant donner, à titre d'exemple, des détails de réalisation pratique.

On a choisi pour le circuit 500, une RAM statique de 32k x 16 permettant de mémoriser des valeurs sur 16 bits, soit + 32767 à - 32768. Le cycle recommence identique à lui-même toutes les 32768 cellules giguées.

L'unité arithmétique et logique 802 travaille sur 16 bits et forme, avec le séquenceur 803, une unité de séquencement des opérations en synchronisme avec le signal H.

Les fonctions des unités 601 et 602 sont intégrées dans un circuit logique de type FPGA (Field Programmable Gate Array).

Les piles de stockage 701, 702 ont une capacité de 256k x 8, car on a fixé l'écart maximum entre deux cellules G égal à 4096 cellules. Chaque pile doit avoir au moins une taille de 53 x 4096 octets.

Pour avoir cette capacité, les piles sont constituées de RAM statiques associées à une logique classique en soi 804 qui permet de gérer les lectures et écritures.

On peut écrire dans ces piles un octet au rythme de l'horloge de base soit 19,44MHz et simultanément lire un octet. Le temps d'accès des mémoires actuelles étant limité on a choisi la structure suivante pour l'écriture et la lecture :

En effet, la longueur impaire d'une cellule ATM gêne la gestion par paire d'octets au rythme de 155 Mbit/s. Pour gérer de manière plus rapide des écritures en mémoire, d'ordinaire on travaille par paire de valeurs. Par exemple si on veut stocker des octets en mémoire de 8 bits à la limite du temps d'accès de ces mémoires, il suffit de mettre deux octets en parallèle dans des mémoires 16 bits. On travaille alors à un rythme deux fois plus lent. Par contre ceci est impossible dans cette réalisation.

Ainsi, pour résoudre ce problème, on considère un flux impair d'octets. On décompose ce flux en trois flux différents:

- le flux des octets pairs dans lequel sont rangés les octets de rang 0,2, ..., 2i, ..., etc,.
- le flux des octets impairs qui comporte les octets 1, 3, 5, 2 i+1), etc,
- le flux des octets derniers (DER).

Cette décomposition permet d'obtenir 2 flux (pair et impair) dont le nombre d'éléments est identique et de plus, ce nombre est pair. Le dernier de chaque suite est stocké dans une pile de type FIFO référencée 701. De cette manière, on peut gérer des écritures lectures par paire et traiter le dernier en un seul cycle avec une pile FIFO de capacité déterminée mais de temps d'accès très rapide, la capacité de la FIFO dépend du nombre d'octets que l'on veut stocker en même temps dans la RAM. Si cette RAM comporte 2 koctets et si la suite impaire est égale à (2N + 1) octets, la FIFO doit avoir une capacité de $\frac{2^{k-1}}{N}$ mots de 16 bits.

Les octets pairs et impairs 0 et 1 sont écrits en même temps puis, c'est au tour des octets 2 et 3 etc. Quand le dernier DER arrive, on l'écrit dans la FIFO, 703 réservée au dernier octet de chaque suite.

Pour la lecture on adopte le même principe.

On a, par conséquent, réalisé un système simple qui permet d'écrire et de lire toute suite impaire d'octets par paire. Ce qui permet en plus d'utiliser l'indicateur de file vide de cette pile FIFO comme indicateur général pour cet ensemble de stockage.

## Revendications

1. Procédé de simulation de transmission sur un réseau de transmission par transfert asynchrone, caractérisé en ce qu'il consiste à simuler le raccordement à ce réseau, à générer un signal numérique de format et de débit correspondant aux normes de transmission sur le réseau, le signal étant constitué de cellules identifiables par un en-tête, à générer des erreurs et traiter ce signal pour y introduire ces erreurs; dans lequel, la simulation du raccordement au réseau par un terminal consiste en réception à :

- adapter le rythme d'arrivée de cellules issues du terminal émetteur au rythme des cellules générées;

- multiplexer les cellules reçues aux cellules générées pour obtenir le signal numérique de format et de débit correspondant aux normes du réseau et dans lequel, la simulation du raccordement au réseau par un terminal consiste en émission à:

- identifier dans le signal numérique généré, des cellules destinées à un terminal de réception;

- transmettre les cellules identifiées à ce terminal au rythme de réception par le terminal.

2. Procédé de simulation selon l'une quelconque des revendications précédentes, caractérisé en ce qu'il consiste à simuler la transmission selon les deux sens de transmission d'un terminal A vers un terminal B et inversement.

3. Procédé de simulation selon l'une quelconque des revendications précédentes, caractérisé en ce que la génération d'erreur réseau consiste à générer des erreurs binaires et/ou des erreurs cellules et/ou des écarts variables entre cellules phénomène dénommé "gigue".

4. Procédé de simulation selon la revendication 3, caractérisé en ce que la génération d'erreurs binaires dans le signal numérique incident de format et de débit correspondant aux normes de transmission du réseau comporte les étapes suivantes:

- enregistrer un ou plusieurs modèles prédéterminés de génération d'erreurs;

- charger dans des moyens de mémorisation à lecture et écriture le modèle désiré de manière à obtenir un signal numérique de génération d'erreur par lecture de ces moyens de mémorisation; le signal numérique de génération est constitué des mots correspondant à des motifs d'erreur, et en ce que le changement dans les moyens de mémorisation consiste d'une part, à charger ces motifs et d'autre part, à charger le nombre de fois que doit être répété chaque motif de l'opération de lecture consistant à lire successivement autant de fois le motif que l'indique le nombre mémorisé pour ce motif;

- combiner le signal de génération d'erreur au signal incident de manière à introduire des erreurs sur des éléments binaires de ce signal.

5. Procédé de simulation selon la revendication 4, caractérisé en ce que la combinaison des deux signaux consiste à inverser des éléments binaires du signal incident par des éléments binaires du signal de génération d'erreur.

6. Procédé de simulation selon la revendication 4, caractérisé en ce que chaque modèle est prédéterminé à partir d'une loi mathématique et/ou à partir de mesures effectuées lors d'une transmission sur ledit réseau.

7. Procédé de simulation selon la revendication 4, caractérisé en ce que le les motifs sont des mots de 8 bits et en ce que le nombre de fois que doit être répété un octet est codé sur 16 bits.

8. Procédé de simulation selon l'une quelconque des revendication 4 à 7, caractérisé en ce qu'il cnsite en outre à réaliser un codage de correction d'erreur sur le signal incident avant d'opérer la combinaison avec le signal de gnération d'erreur, et en ce qu'il consiste à réaliser un décodage de correction d'erreur sur le signal obtenu après combinaison, et en ce que le codage de correction d'erreur et de décodage de correction d'erreur sont réalisé sur les en-têtes de cellules.

9. Procédé de simulation selon la revendication 3, caractérisé en ce que la génération d'erreurs cellules dans le signal numérique incident ayant un format et ayant un débit correspondant aux normes de transmission d'un réseau ATM et comprenant des cellules affectées à une communication, identi-fiables par leur en-tête, comporte les étapes suivantes:

- enregistrer un ou plusieurs modèles d'erreurs prédéterminés;

- charger dans des moyens de mémorisation à lecture et écriture le modèle désiré de manière à obtenir un signal numérique de énération d'erreurs par lecture de ces moyens de mémorisation;

- générer des cellules erronées;

- remplacer des cellules du signal incident par des cellules erronées en fonction du cadencement imposé par le signal de génération d'erreur.

10. Procédé de simulation selon la revendication 8 ou 9, caractérisé en ce que le chargement dans les moyens de mémorisation consiste, d'une part, à changer les motifs et, d'autre part, à charger en association à chaque motif, un mot de codage de la distance entre les motifs de manière à obtenir un facteur de répétition pour chaque motif, l'opération de lecture du motif consistant alors à lire successivement autant de fois le motif que l'indique le facteur pour ce motif.

**11.** Procédé de simulation selon l'une quelconque des revendications 9 à 10, caractérisé en ce que chaque motif comporte un bit dont la valeur traduit l'apparition d'une cellule erronée ou l'apparition d'une cellule sans erreur et un bit dont la valeur traduit une perte ou une insertion de cellule.

**12.** Procédé de simulation selon l'une quelconque des revendications 9 à 11, caractérisé en ce que la génération de cellules erronées consiste:

- à mémoriser les en-têtes identifiant une cellule vide et une cellule de la communication affectée;
- à insérer l'en-tête d'une cellule vide dans une cellule valide incidente afin d'obtenir une perte de cellule; ou,
- à insérer l'en-tête d'une cellule de la communication dans une cellule vide incidente afin d'obtenir une insertion de cellule.

**13.** procédé de simulation selon l'une quelconque des revendication 9 à 12, caractérisé en ce que chaque modèle est prédéterminé, soit à partir de lois mathématiques, par exemple, la loi de Poisson ou autre, soit à partir de mesures effectuées sur une transmission réelle sur ledit réseau.

**14.** Procédé de simulation selon la revendication 3, caractérisé en ce que la génération de gigue cellules dans un signal incident transmis en mode ATM, comprend les étapes suivantes:

- mémoriser un modèle de consigne de gigue préétablis,
- déterminer l'écart entre les cellules incidentes relatives à une même communication cet écart pouvant être variable,
- à modifier ou non l'écart entre cellules de cette même communication selon la consigne, cette modification consistant à enlever ou à insérer un nombre de cellules donné par la consigne entre les cellules d'une même communication, ce nombre étant obtenu par la relation :

$$nNG = ECART + VG + DELTA$$

ou VG représente la valeur de consigne, ECART étant l'écart séparant deux cellules, et DELTA étant un reliquat de gigue.

**15.** Procédé de simulation selon la revendication 14, caractérisé en ce que la modification consiste à enlever ou à insérer un nombre de cellules donné par la consigne entre les cellules d'une même communication.

**16.** Procédé de simulation selon la revendication 14, caractérisé en ce que la détermination de l'écart entre cellules consiste à l'arrivée de chaque cellule:

- à identifier la cellule par son en-tête;
- à compter après identification, le nombre de cellules séparant deux cellules relatives à une même communication.

**17.** Procédé de simulation selon la revendication 16, caractérisé en ce que l'identification d'une cellule consiste:

- au préalable, à enregistrer l'en-tête d'une cellule concernant la communication affectée par la gigue;
- à comparer les en-têtes des cellules incidentes à cet en-tête;
- à stocker après comptage l'écart entre les cellules de manière à le modifier ou non selon la consigne.

**18.** Simulateur de transmission sur un réseau de transmission par transfert asynchrone, caractérisé en ce qu'il comporte des moyens de raccordement (CA, CB), des moyens de génération (CA, CB, C1, C2, C3) d'un signal numérique de format et de débit correspondant aux normes de transmission du réseau et des moyens de commande et de traitement (100); dans lequel, les moyens de raccordement comportent des moyens de raccordement en réception (R) d'un terminal au réseau et des moyens de raccordement en émission (E) du réseau au terminal et dans lequel, les moyens de raccordement en réception (R) sont aptes à recevoir des cellules émises par un terminal A, ces moyens comportent une interface ligne réception (10), des moyens d'adaptation du rythme (20) d'arrivée de ces cellules aux cellules générées, des moyens de multiplexage (40) pour multiplexer les cellules reçues aux cellules générées de manière à obtenir le signal de format et de débit requis.

**19.** Simulateur de transmission selon la revendication 17, caractérisé en ce que les moyens de raccordement en émission (E) comportent des moyens d'identification des cellules (60) de manière à détecter dans un signal numérique généré, les cellules destinées à un terminal (A) et une interface ligne émission (50) pour transmettre ces cellules au terminal.

**20.** Stimulateur de transmission selon l'une quelconque des revendications 18 et 19, caractérisé en ce que les moyens de traitement et de commande comportent des moyens de génération d'erreurs sur un signal incident, ce signal étant le signal numérique généré ou le signal obtenu par multiplexage.

21. Simulateur de transmission selon l'une quelconque des revendications 17 à 20, caractérisé en ce que les moyens de génération d'erreur comportent des moyens de générateur d'erreurs binaires (C1).

22. Simulateur de transmission selon l'une quelconque des revendications 17 à 24, caractérisé en ce que les moyens de génération d'erreur comportent des moyens de générateur d'erreurs de cellules (C2).

23. Simulateur de transmission selon l'une quelconque des revendications 17 à 21, caractérisé en ce que les moyens de génération d'erreur comportent des moyens de génération de gigue ou d'écart variable entre cellules (C3).

24. Simulateur selon la revendication 21, caractérisé en ce que les moyens de génération d'erreurs binaires comportent:

   - des premiers moyens (102) de mémorisation dans lesquels sont enregistrés un ou plusieurs modèles prédéterminés de génération d'erreurs,
   - des deuxièmes moyens (71) de mémorisation à lecture et écriture dans lesquels est chargé le modèle désiré de manière à obtenir un signal numérique de génération d'erreur par lecture de ces deuxièmes moyens de mémorisation,
   - des moyens de commande (100) aptes à commander des opérations de lecture et d'écriture dans un deuxième moyens de mémorisation,
   - des moyens de combinaison (80) du signal incident et du signal de génération d'erreur.

25. Simulateur selon la revendication 24, caractérisé en ce que les deuxièmes moyens de mémorisation (71) comportent une première et une deuxième zone mémoire, en ce que le signal d'erreur (DM) est constitué de mots correspondant à des motifs d'erreur, ces motifs étant chargés dans la première zone mémoire, la deuxième zone mémoire comportant des mots correspondant au nombre de fois que doit être lu successivement un même motif, et en ce qu'il comporte un compteur d'adresse (74) permettant d'adresser les mémoires, ce compteur étant incrémenté après attente du nombre de cycle contenu dans la deuxième zone mémoire (73).

26. Simulateur selon l'une quelconque des revendications 26 ou 25, caractérisé en ce qu'il comporte en outre, des moyens de codage de correction d'erreur (84) placés en amont des moyens de combinaison (80) et des moyens de décodage de correction d'erreur (85) placés en aval des moyens de combinaison.

27. Simulateur selon l'une quelconque des revendications 24 à 26, caractérisé en ce que les moyens de combinaison sont réalisés par un OU exclusif.

28. Simulateur selon la revendication 26, caractérisé en ce que les moyens de génération d'erreurs cellules comportent:

   - des premiers moyens (100) de mémorisation dans lesquels sont enregistrés un ou plusieurs modèles prédéter-minés de génération d'erreurs cellule;
   - des deuxièmes moyens (200) de mémorisation à lecture et écriture dans lesquels on charge au moment voulu le modèle désiré de manière à obtenir un signal numérique de génération d'erreurs par lecture de ces deuxièmes moyens de mémorisation,
   - des moyens de commande (100) aptes à commander des opérations de lecture et d'écriture des deuxièmes moyens de mémorisation,
   - des moyens de génération d'erreurs cellules (300) recevant le signal numérique de génération d'erreurs et générant des erreurs cellules dans le signal incident en fonction du signal numérique reçu.

29. Simulateur selon la revendication 22 ou 28, caractérisé en ce que les moyens (300) de génération d'erreurs de cellules comportent des moyens de reconnaissance d'en-tête (301), des moyens de génération d'une cellule de remplacement (302), et des moyens de multiplexage (303) permettant, sur commande des moyens de reconnaissance d'entête, de remplacer une cellule incidente par une cellule de remplacement.

30. Simulateur selon la revendication 28, caractérisé en ce que les moyens (200) de mémorisation comportent une mémoire (201) ayant une première (Z1) et une deuxième (Z2) zone de mémoire, le signal numérique de génération d'erreurs est constitué de mots correspondant à des motifs d'erreurs (DM), ces motifs étant chargés dans la première zone mémoire, la deuxième zone mémoire comportant des mots (DR), correspondant aux nombres de fois que doit être lu successivement chaque motif; ces moyens (200) comportant en outre un décompteur d'adresse (203) permettant d'adresser les zones mémoires, ce décompteur étant réinitialisé par la sortie de la deuxième zone mémoire, les moyens (200) comprenant également des moyens (202) de gestion d'accès à la mémoire.

31. Simulateur selon la revendication 30, caractérisé en ce que la mémoire (201) est constituée par une mémoire RAM dynamique.

32. Simulateur selon la revendication 30 ou 31, caractérisé en ce que la mémoire (201) est une mémoire RAM vidéo.

33. Simulateur selon la revendication 23, caractérisé en ce que les moyens de gigue comportent:

- des moyens de mémorisation d'une consigne (500) de gigue, préalablement établie;
- des moyens (600) de mesure de l'écart entre cellules relatives à une même communication;
- des moyens d'aiguillage (700) des cellules incidentes selon qu'elles sont relatives à la même communication ou non;
- des moyens de commande (800) permettant de modifier ou non l'écart entre cellules relatives à une même communication.

34. Simulateur selon la revendication 27 ou 33, caractérisé en ce que les moyens de mesure de l'écart (600) comportent:

- un détecteur d'en-tête des cellules (601);
- un compteur d'écart entre cellules (602) ;
- un registre de stockage pour stocker la valeur de cet écart (603).

35. Simulateur selon la revendication 33, caractérisé en ce que les moyens d'aiguillage (800) comportent un premier registre de stockage (701) de cellules relatives à la même communication et un deuxième registre de stockage (702) de cellules autres.

36. Simulateur selon la revendication 33, caractérisé en ce qu'il comporte un registre de stockage (603) de l'écart entre cellules relatives à la même communication.

37. Simulateur selon la revendication 33, caractérisé en ce que les moyens d'aiguillage comportent en outre un registre de stockage (703) permettant de réaliser des écritures et lectures d'octets par paire, le dernier octet de chaque cellule étant stocké dans ce registre.

38. Simulateur selon la revendication 33, caractérisé en ce que les moyens de commande (800) comportent une unité arithmétique, un séquenceur et une logique d'adressage des registres.

39. Simulateur selon la revendication 33, caractérisé en ce que les moyens de commande de mémorisation comportent une mémoire (500) à lecture et écriture de type RAM statique.

40. Simulateur selon la revendication 33, caractérisé en ce que les registres de stockage (701, 702) sont réalisés par des mémoires RAM statiques.

**Patentansprüche**

1. Verfahren zur Simulation der Übertragung über ein Asynchrontransfermodus-Übertragungsnetz, **dadurch gekennzeichnet**, daß es darin besteht, den Anschluß an dieses Netz zu simulieren, ein Digitalsignal zu erzeugen, dessen Format und Durchsatz den Übertragungsnormen des Netzes entspricht, wobei das Signal durch aufgrund eines Kopfes identifizierbare Zellen gebildet wird, Fehler zu erzeugen und dieses Signal zu verarbeiten, um diese Fehler einzuführen;
bei dem die Simulation des Netzanschlusses durch ein Terminal beim Empfang darin besteht:

- den Ankunftstakt der von dem Sendeterminal stammenden Zellen anzupassen an den Takt der erzeugten Zellen;
- die empfangenen Zellen mit den erzeugten Zellen zu multiplexieren, um das Digitalsignal mit Format und Durchsatz entsprechend den Normen des Netzes zu erhalten, und bei dem die Simulation des Anschlusses an das Netz durch ein Terminal beim Senden darin besteht:

- bei dem erzeugten Digitalsignal Zellen zu identifizieren, die für ein Empfangsterminal bestimmt sind;
- die identifizierten Zellen an dieses Terminal zu übertragen, im Empfangstakt des Terminals.

2. Simulationsverfahren nach dem vorangehenden Anspruch, dadurch gekennzeichnet, daß es darin besteht, die Übertragung eines Terminals A an ein Terminal B und umgekehrt in beiden Übertragungsrichtungen zu simulieren.

3. Simulationsverfahren nach einem der vorangehenden Ansprüche, dadurch gekennzeichnet, daß die Netzfehlererzeugung darin besteht, Binärfehler und/oder Zellenfehler und/oder variable Abstände zwischen "Jitter"-Zellen genannten Phänomenzellen zu erzeugen.

4. Simulationsverfahren nach Anspruch 3, dadurch gekennzeichnet, daß die Erzeugung von Binärfehlern in dem eintreffenden Digitalsignal mit Format und Durchsatz entsprechend den Übertragungsnormen des Netzes die folgenden Schritte umfaßt:

- Aufzeichnen eines oder mehrerer festgelegter Fehlererzeugungsmodelle;

- Laden des gewünschten Modells in die Lese- und Schreibspeichereinrichtungen, um durch Lesen dieser Speichereinrichtungen ein digitales Fehlererzeugungssignal zu erhalten, wobei das digitale Erzeugungssignal durch Wörter gebildet wird, die Fehlermustern entsprechen,

und dadurch, daß das Laden in den Speichereinrichtungen darin besteht, einerseits die Muster und andererseits die Anzahl von Malen zu laden, die jedes Muster der Leseoperation wiederholt werden muß, darin bestehend, das Muster nacheinander so oft zu lesen, wie die für dieses Muster abgespeicherte Zahl angibt;

- Kombinieren bzw. Verknüpfen des Fehlererzeugungssignals mit dem eintreffenden Signal, um Fehler in die Binärelemente dieses Signals einzuführen.

5. Simulationsverfahren nach Anspruch 4, dadurch gekennzeichnet, daß die Verknüpfung der beiden Signale darin besteht, Binärelemente des eintreffenden Signals durch Binärelemente des Fehlererzeugungssignals zu invertieren.

6. Simulationsverfahren nach Anspruch 4, dadurch gekennzeichnet, daß jedes Modell festgelegt wird aufgrund eines mathematischen Gesetzes und/oder aufgrund von Messungen, durchgeführt bei einer Übertragung über das genannte Netz.

7. Simulationsverfahren nach Anspruch 4, dadurch gekennzeichnet, daß die Muster 8-Bit-Wörter sind und dadurch, daß die Anzahl von Malen, die ein Byte wiederholt werden muß, auf 16 Bits codiert werden.

8. Simulationsverfahren nach einem der Ansprüche 4 bis 7, dadurch gekennzeichnet, daß es außerdem darin besteht, an dem eintreffenden Signal vor der Verknüpfung mit dem Fehlererzeugungssignal eine Fehlerkorrekturcodierung durchzuführen; dadurch, daß es darin besteht, an dem erhaltenen Signal nach der Verknüfpung eine Fehlerkorrektur-Decodierung vorzunehmen; und dadurch, daß die Fehlerkorrektur-Codierung und die Fehlerkorrektur-Decodierung an den Zellenköpfen durchgeführt werden.

9. Simulationsverfahren nach Anspruch 3, dadurch gekennzeichnet, daß die Zellenfehlererzeugung in dem eintreffenden Digitalsignal, dessen Format und dessen Durchsatz den Übertragungsnormen eines ATM-Netzes entspricht und das Zellen umfaßt, die einer Kommunikation zugeordnet sind, identifizierbar durch ihren Kopf, die folgenden Schritte umfaßt:

- Aufzeichnen eines oder mehrerer festgelegter Fehlererzeugungsmodelle;
- Laden des gewünschten Modells in die Lese- und Schreibspeichereinrichtungen, um durch Lesen dieser Speichereinrichtungen ein digitales Fehlererzeugungssignal zu erhalten;
- Erzeugen der fehlerhaften Zellen;
- Ersetzen der Zellen des eintreffenden Signals durch fehlerhafte Zellen in Abhängigkeit von dem durch das Fehlererzeugungssignal vorgeschriebenen Takt.

10. Simulationsverfahren nach Anspruch 8 oder 9, dadurch gekennzeichnet, daß das Laden in den Speichereinrichtungen darin besteht, einerseits die Muster zu wechseln und andererseits, in Verbindung mit jedem Muster, ein Codierungswort des Abstands zwischen den Mustern zu laden, um für jedes Muster einen Wiederholungsfaktor zu erhalten, wobei die Leseoperation des Musters dann darin besteht, das Muster nacheinander so oft zu lesen, wie der Faktor für dieses Muster angibt.

11. Simulationsverfahren nach einem der Ansprüche 9 bis 10, dadurch gekennzeichnet, daß jedes Muster ein Bit enthält, dessen Wert die Zugehörigkeit zu einer fehlerhaften Zelle oder die Zugehörigkeit zu einer fehlerfreien Zelle ausdrückt, und ein Bit, dessen Wert einen Zellenverlust oder eine Zelleneinfügung ausdrückt.

12. Simulationsverfahren nach einem der Ansprüche 9 bis 11, dadurch gekennzeichnet, daß die Erzeugung fehlerhafter Zellen darin besteht:

- die Köpfe abzuspeichern, die eine Leerzelle und eine der Kommunikation zugeordnete Zelle identifizieren;
- den Kopf einer Leerzelle in eine eintreffende gültige Zelle einzufügen, um einen Zellenverlust zu erhalten; oder
- den Kopf einer Zelle der Kommunikation in eine eintreffende Leerzelle einzufügen, um eine Zelleneinfügung zu erhalten.

13. Simulationsverfahren nach einem der Ansprüche 9 bis 12, dadurch gekennzeichnet, daß jedes Modell festgelegt ist, entweder aufgrund mathmatischer Gesetze, z.B. des Poission-Gesetzes oder anderer, oder aufgrund von Messungen, durchgeführt bei einer realen Übertragung über dieses Netz.

14. Simulationsverfahren nach Anspruch 3, dadurch gekennzeichnet, daß die Erzeugung von Jitter-Zellen bei einem eintreffenden, im ATM-Modus übertragenen Signal die folgenden Schritte umfaßt:

- Abspeichern eines festgelegten Jittersollwert-Modells;

- Festlegen des Abstands zwischen den ein und derselben Kommunikation zugeordneten Zellen, wobei dieser Abstand veränderlich sein kann,
- Modifizieren, oder nicht, des Abstands zwischen Zellen dieser selben Kommunikation gemäß des Sollwerts, wobei diese Modifikation darin besteht, zwischen den Zellen derselben Kommunikation eine durch den Sollwert bestimmte Anzahl von Zellen zu entnehmen oder einzufügen, wobei man diese Anzahl durch folgende Relation erhält:

$$nNG = ECART + VG + DELTA$$

wo VG den Sollwert darstellt, ECART der Abstand zwischen zwei Zellen ist und DELTA eine Jitter-Restmenge ist.

15. Simulationsverfahren nach Anspruch 14, dadurch gekennzeichnet, daß die Modifikation darin besteht, eine durch den Sollwert bestimmte Anzahl Zellen zwischen die Zellen derselben Kommunikation einzufügen.

16. Simulationsverfahren nach Anspruch 14, dadurch gekennzeichnet, daß die Festlegung des Abstands zwischen Zellen beim Eintreffen jeder Zelle darin besteht:

- die Zelle durch ihren Kopf zu identifizieren;
- nach der Identifikation die Anzahl der Zellen zu zählen, die zwei derselben Kommunikation zugeordnete Zellen trennen.

17. Simulationsverfahren nach Anspruch 16, dadurch gekennzeichnet, daß die Identifikation einer Zelle darin besteht:

- im voraus hinsichtlich der durch den Jitter beeinflußten Kommunikation den Kopf einer Zelle aufzuzeichnen;
- die Köpfe der eintreffenden Zellen mit diesem Kopf zu vergleichen;
- nach dem Zählen den Abstands zwischen den Zellen abzuspeichern, um sie je nach Sollwert zu modifizieren oder nicht.

18. Simulator der Übertragung auf einem Übertragungsnetz im asynchronen Transfermodus, dadurch gekennzeichnet, daß er Anschlußeinrichtungen (CA, CB), Erzeugungseinrichtungen (CA, CB, C1, C2, C3) eines Digitalsignals mit den Übertragungsnormen des Netzes entsprechendem Format und Durchsatz sowie Steuer- und Verarbeitungseinrichtungen (100) umfaßt, wobei die Anschlußeinrichtungen Empfangsanschlußeinrichtungen (R) eines Terminals an das Netz und Sendeanschlußeinrichtungen (E) des Netzes an das Terminal umfassen, die Empfangsanschlußeinrichtungen (R) fähig sind, von einem Terminal (A) ausgesandte Zellen zu empfangen, diese Einrichtungen eine Empfangsschnittstellenleitung (10), Anpassungseinrichtungen (20) des Ankunftstakts dieser Zellen bei den erzeugten Zellen und Multiplexiereinrichtungen (40) zum Multiplexieren der empfangenen Zellen mit den erzeugten Zellen umfassen, um das Signal mit erforderlichem Format und Durchsatz zu erhalten.

19. Übertragungssimulator nach Anspruch 17, dadurch gekennzeichnet, daß die Sendeanschlußeinrichtungen (E) Identifikationseinrichtungen der Zellen (60) umfassen, um in einem erzeugten Digitalsignal die für ein Terminal (A) bestimmten Zellen zu detektieren, und eine Sendeleitungsschnittstelle (50), um diese Zellen an das Terminal zu übertragen.

20. Übertragungssimulator nach einem der Ansprüche 18 und 19, dadurch gekennzeichnet, daß die Steuer- und Verarbeitungseinrichtungen Einrichtungen zur Erzeugung von Fehlern an einem eintreffenden Signal umfassen, wobei dieses Signal das erzeugte Digitalsignal oder das durch Multiplexierung erhaltene Signal ist.

21. Simulator nach einem der Ansprüche 17 bis 20, dadurch gekennzeichnet, daß die Fehlererzeugungseinrichtungen Einrichtungen (C1) zur Erzeugung von Binärfehlern umfassen.

22. Simulator nach einem der Ansprüche 17 bis 21, dadurch gekennzeichnet, daß die Fehlererzeugungseinrichtungen Einrichtungen (C2) zur Erzeugung von Zellenfehlern umfassen.

23. Simulator nach einem der Ansprüche 17 bis 21, dadurch gekennzeichnet, daß die Fehlererzeugungseinrichtungen Einrichtungen (C3) zur Erzeugung von Jitter oder variablem Zellenzwischenabstand umfassen.

24. Simulator nach Anspruch 21, dadurch gekennzeichnet, daß die Fehlererzeugungseinrichtungen umfassen:

- erste Speichereinrichtungen (102), in denen ein oder mehrere festgelegte Fehlererzeugungsmodelle aufgezeichnet sind,
- zweite Lese- und Schreibspeichereinrichtungen (71), in die das gewünschte Modell geladen wird, um durch Lesen dieser zweiten Speichereinrichtungen ein digitales Fehlererzeugungssignal zu erhalten,

- Steuereinrichtungen (100), fähig in einer zweiten Speichereinrichtung Lese- und Schreiboperationen zu steuern,
- Kombinations- bzw. Verknüpfungseinrichtungen (80) des eintreffenden Signals und des Fehlererzeugungssignals.

25. Simulator nach Anspruch 24, dadurch gekennzeichnet, daß die zweiten Speichereinrichtungen (71) eine erste und eine zweite Speicherzone umfassen, dadurch, daß das Fehlersignal (DM) durch Fehlermustern entsprechende Wörter gebildet wird, wobei diese Muster in der ersten Speicherzone geladen sind, und die zweite Speicherzone Wörter enthält, die der Anzahl von Malen entsprechen, die dasselbe Muster nacheinander gelesen werden muß, und dadurch, daß er einen Adressenzähler (74) umfaßt, der ermöglicht, die Speicher zu adressieren, wobei dieser Zähler inkrementiert wird nach Abwarten der in der zweiten Speicherzone (73) enthaltenen Anzahl von Zyklen.

26. Simulator nach einem der Ansprüche 24 oder 25, dadurch gekennzeichnet, daß er außerdem den Verknüpfungseinrichtungen (80) vorgeschaltete Fehlerkorrektur-Codiereinrichtungen (84) und den Verknüpfungseinrichtungen nachgeschaltete Fehlerkorrektur-Decodiereinrichtungen (85) umfaßt.

27. Simulator nach einem der Ansprüche 24 bis 26, dadurch gekennzeichnet, daß die Verknüpfungseinrichtungen durch ein Exklusiv-ODER-Glied realisiert werden.

28. Simulator nach Anspruch 26, dadurch gekennzeichnet, daß die Zellenfehlererzeugungseinrichtungen umfassen:

- erste Speichereinrichtungen (100), in denen ein oder mehrere festgelegte Zellenfehlererzeugungsmodelle aufgezeichnet sind;
- zweite Lese- und Schreibspeichereinrichtungen (200), in die man zum gewünschten Zeitpunkt das gewünschte Modell lädt, um durch Lesen dieser zweiten Speichereinrichtungen ein Fehlererzeugungs-Digitalsignal zu erhalten,
- Steuereinrichtungen (100), fähig Lese- und Schreiboperationen der zweiten Speichereinrichtungen zu steuern,
- Zellenfehlererzeugungseinrichtungen (300), die das digitale Fehlererzeugungssignal empfangen und Zellenfehler in dem eintreffenden Signal erzeugen, in Abhängigkeit von dem empfangenen Digitalsignal.

29. Simulator nach einem der Ansprüche 22 oder 28, dadurch gekennzeichnet, daß die Zellenfehlererzeugungseinrichtungen (300) Kopferkennungseinrichtungen (301), Einrichtungen (302) zur Erzeugung einer Austauschzelle und Multiplexiereinrichtungen (303) umfassen, die auf Befehl den Kopferkennungseinrichtungen ermöglichen, eine eintreffende Zelle durch eine Austauschzelle zu ersetzen.

30. Simulator nach Anspruch 28, dadurch gekennzeichnet, daß die Speichereinrichtungen (200) einen Speicher (201) mit einer ersten (Z1) und zweiten (Z2) Speicherzone umfassen, das digitale Fehlererzeugungssignal durch Fehlermustern (DM) entsprechende Wörter gebildet wird, diese Muster in die erste Speicherzone geladen werden, die zweite Speicherzone Wörter (DR) enthält, die der Anzahl von Malen entsprechen, die jedes Muster nacheinander gelesen werden muß, und daß diese Einrichtungen (200) außerdem einen Adressenzähler bzw. -abziehzähler (203) umfassen, der ermöglicht, die Speicherzonen zu adressieren, wobei dieser Zähler bzw. Abziehzähler durch den Ausgang der zweiten Speicherzone wieder zurückgestellt bzw. wieder auf Null gestellt wird und die Einrichtungen (200) auch Speicherzugriff-Steuereinrichtungen (202) umfassen.

31. Simulator nach Anspruch 30, dadurch gekennzeichnet, daß der Speicher (201) durch einen dynamischen RAM-Speicher gebildet wird.

32. Simulator nach einem der Ansprüche 30 oder 31, dadurch gekennzeichnet, daß der Speicher (201) ein RAM-Videospeicher ist.

33. Simulator nach Anspruch 23, dadurch gekennzeichnet, daß die Jitter-Einrichtungen umfassen:

- Speichereinrichtungen einer vorher erstellten Jitter-Vorschrift (500);
- Meßeinrichtungen (600) des Abstands zwischen dieselbe Kommunikation betreffenden Zellen;
- Verzweigungseinrichtungen (700) der eintreffenden Zellen entsprechend ihrer Zugehörigkeit zu derselben Kommunikation oder nicht;
- Steuereinrichtungen (800), die ermöglichen, den Abstand zwischen Zellen, die zu derselben Kommunikation gehören, zu verändern oder nicht;

34. Simulator nach Anspruch 27 oder 33, dadurch gekennzeichnet, daß die Abstandsmeßeinrichtungen (600) umfassen:

- einen Zellenkopfdetektor (601);
- einen Zellenzwischenabstandszähler (602) ;
- ein Speicherregister zum Abspeichern des Werts dieses Abstands (603).

**35.** Simulator nach Anspruch 33, dadurch gekennzeichnet, daß die Verzweigungseinrichtungen (800) ein erstes Speicherregister (701) von derselben Kommunikation zugeordneten Zellen und ein zweites Speicherregister der anderen Zellen umfaßt.

**36.** Simulator nach Anspruch 33, dadurch gekennzeichnet, daß er ein Speicherregister (603) des Abstands zwischen derselben Kommunikation zugeordneten Zellen umfaßt.

**37.** Simulator nach Anspruch 33, dadurch gekennzeichnet, daß die Verzweigungseinrichtungen außerdem ein Speicherregister (703) umfaßt, das ermöglicht, Bytes paarweise ein- und auszulesen, wobei das letzte Byte jeder Zelle in diesem Register gespeichert ist.

**38.** Simulator nach Anspruch 33, dadurch gekennzeichnet, daß die Steuereinrichtungen (800) eine arithmetische Einheit, eine Ablauf- bzw. Folgesteuerung und eine Adressierlogik der Register umfassen.

**39.** Simulator nach Anspruch 33, dadurch gekennzeichnet, daß die Einspeicherungssteuereinrichtungen einen Lese- und Schreibspeicher (500) des statischen RAM-Typs umfassen.

**40.** Simulator nach Anspruch 33, dadurch gekennzeichnet, daß die Speicherregister (701, 702) durch statische RAM-Speicher gebildet werden.

**Claims**

**1.** A method of simulating transmission on an asynchronous transfer mode transmission network, characterised in that it consists in simulating the connection to this network, generating a digital signal of a format and rate which comply with the standards for transmission on the network, the signal being made up of cells identifiable by a header, generating errors and processing this signal so as to insert these errors therein; wherein the connection to the network by a terminal as a receiver is simulated by :

- adapting the arrival rate of cells from the transmitting terminal to the rate of the generated cells;
- multiplexing the cells received with the generated cells to obtain the digital signal of a format and flow rate corresponding to the network standards and wherein the connection to the network by a terminal as a transmitter is simulated by:

- identifying in the generated digital signal cells addressed to a destination terminal;
- transmitting the identified cells to this terminal at the rate of reception by the terminal.

**2.** A simulation method as claimed in the preceding claim, characterised in that it consists in simulating the transmission in two transmission directions from a terminal A to a terminal B and vice versa.

**3.** A simulation method as claimed in any one of the preceding claims, characterised in that the process of generating a network error consists in generating binary errors and/or cell errors and/or variable spaces between cells, a phenomenon known as "jitter".

**4.** A simulation method as claimed in claim 3, characterised in that the process of generating binary errors in the incident digital signal of a format and flow rate corresponding to the transmission standards of the network consists of the following steps:

- saving one or more predetermined error-generation models;
- loading the desired model into read-write memory storage means in order to obtain a digital error-generation signal by reading these memory means; the digital generator signal consisting of words corresponding to error patterns and the change in the memory means consisting on the one hand in loading these patterns and on the other in loading the number of times that each pattern of the read operation, consisting in reading the pattern as many times in succession as indicated by the number stored for this pattern, must be repeated;
- combining the error-generation signal with the incident signal in order to introduce errors into the binary elements of this signal.

**5.** A simulation method as claimed in claim 4, characterised in that the process of combining two signals consists in inverting binary elements of the incident signals with binary elements of the error-generation signal.

**6.** A simulation method as claimed in claim 4, characterised in that each model is predetermined on the basis of a mathematical law and/or on the basis of measurements taken during a transmission on said network.

**7.** A simulation method as claimed in claim 4, characterised in that the patterns are 8-bit words and in that the number of times which an octet must be repeated is encoded over 16 bits.

**8.** A simulation method as claimed in any one of claims 4 to 7, characterised in that it consists, in addition, in encoding an error correction on the incident signal before combining it with the error-generation signal and in that it consists in error-correction decoding on the signal obtained after the combining process and the error-correction encoding and the error-correction decoding are performed on the cell headers.

9. A simulation method as claimed in claim 3, characterised in that the process of generating cell errors in the incident digital signal having a format and having a rate corresponding to the transmission standards of an ATM network and consisting of cells assigned to a communication, identifiable by their headers, consists in the following steps:

   - storing one or more predetermined error models;
   - loading the desired model into the read and write memory means in order to obtain a digital error-generation signal by reading these memory means;
   - generating the error cells;
   - replacing cells of the incident signal with error cells at the rate imposed by the error-generation signal.

10. A simulation method as claimed in claim 8 or 9, characterised in that the process of loading into the memory means consists in changing the patterns on the one hand and on the other, loading, in association with each pattern, a word for encoding the distance between the patterns in order to obtain a repetition factor for each pattern, the operation of reading the pattern then consisting in reading the pattern as many times in succession as indicated by the factor for this pattern.

11. A simulation method as claimed in any one of claims 9 to 10, characterised in that each pattern contains a bit, the value of which translates the occurrence of an error cell or the occurrence of a cell without an error and a bit whose value translates the dropping or the insertion of a cell.

12. A simulation method as claimed in any one of claims 9 to 11, characterised in that the process of generating error cells consists in:

   - storing the headers identifying an empty cell and a cell of the assigned communication;
   - inserting the header of an empty cell in a valid incident cell in order to cause a cell to be dropped; or
   - inserting the header of a cell from the communication in an incident empty cell in order to cause a cell to be inserted.

13. A simulation method as claimed in any one of claims 9 to 12, characterised in that each model is predetermined, either on the basis of mathematical laws, such as Poisson's or any other law, for example, or on the basis of measurements conducted on an actual transmission on said network.

14. A simulation method as claimed in claim 3, characterised in that the process of generating cell jitter in an incident signal transmitted in ATM mode consists of the following steps:

   - storing a pre-established jitter reference model,
   - determining the space between the incident cells relating to a same communication, this space being variable,
   - modifying or not the space between cells of this same communication depending on the reference, this modification consisting in removing or inserting a number of cells, as stipulated by the reference, between the cells of a same communication, this number being derived from the relationship:

$$nNg = ECART + VG + DELTA$$

   where VG represents the reference value, ECART the space separating two cells and DELTA being a jitter residue.

15. A simulation method as claimed in claim 14, characterised in that the modification consists in removing or inserting a number of cells stipulated by the reference between the cells of same communication.

16. A simulation method as claimed in claim 14, characterised in that the process of determining the space between cells consists, as each cell arrives, in:

   - identifying the cell by its header;
   - after identification, counting the number of cells separating two cells relating to a same communication.

17. A simulation method as claimed in claim 16, characterised in that the process of identifying a cell consists in:

   - saving, beforehand, the header of a cell relating to the communication affected by the jitter;
   - comparing the headers of incident cells with this header;
   - storing, after counting, the space between the cells in order to modify it or not depending on the reference.

**18.** A simulator for transmissions on an asynchronous transfer mode transmission network, characterised in that it consist of connection means (CA, CB), means for generating (CA, CB, C1, C2, C3) a digital signal of a format and rate corresponding to the transmission standards of the network and control and processing means (100); wherein the connection means have means for connecting a terminal to the network as a receiver (R) and means for connecting the network to the terminal as a transmitter (E) and in which the means for connecting as a receiver (R) are configured to receive cells transmitted by a terminal A, these means having a receiving line interface (10), means for adapting the arrival rate (20) of these cells to the generated cells and multiplexing means (40) for multiplexing the received cells with the generated cells in order to obtain the signal of the requisite format and rate.

**19.** A transmission simulator as claimed in claim 17, characterised in that the means for connecting as a transmitter (E) have means for identifying cells (60) in order to detect in a generated digital signal the cells addressed to a terminal (A) and a transmitting line interface (50) for transmitting these cells to the terminal.

**20.** A transmission simulator as claimed in any one of claims 18 and 19, characterised in that the processing and control means have means for generating errors on an incident signal, this signal being the digital signal generated or the signal obtained by multiplexing.

**21.** A transmission simulator as claimed in any one of claims 17 to 20, characterised in that the error generation means have means for generating binary errors (C1).

**22.** A transmission simulator as claimed in any one of claims 17 to 21, characterised in that the error-generating means have means for generating cell errors (C2).

**23.** A transmission simulator as claimed in any one of claims 17 and 21, characterised in that the error-generating means have means for generating jitter or variable spacing between cells (C3).

**24.** A simulator as claimed in claim 21, characterised in that the means for generating binary errors has:

- first memory means (102) in which one or more predetermined error-generation models are stored,
- second read and write memory means (71) into which the desired model is loaded in order to obtain a digital error-generation signal by reading these second memory means,
- control means (100) configured to control read and write operations in a second memory means,
- means for combining (80) the incident signal and the error-generation signal.

**25.** A simulator as claimed in claim 24, characterised in that the second memory means (71) have a first and a second memory zone, in that the error signal (DM) is made up of words corresponding to error patterns, these patterns being loaded into the first memory zone, the second memory zone containing words corresponding to the number of times which a same pattern must be read in succession, and in that it has an address counter (74) enabling the memories to be addressed, this counter being incremented after reaching the number in the cycle contained in the second memory zone (73).

**26.** A simulator as claimed in any one of claims 24 or 25, characterised in that it has, in addition, error-correction encoding means (84) positioned upstream of the combining means (80) and error-correction decoding means (85) positioned downstream of the combining means.

**27.** A simulator as claimed in any one of claims 24 to 26, characterised in that the combining means are set up as an exclusive OR.

**28.** A simulator as claimed in claim 26, characterised in that the cell-error generation means have:

- first memory means (100) in which one or more predetermined cell-error generation models are stored;
- second read and write memory means (200) into which the desired model is loaded at the desired time in order to obtain a digital error-generation signal by reading these second memory means;
- control means (100) set up to control the read and write operations of the second memory means;
- cell-error generation means (300) receiving the digital error-generation signal and generating cell errors in the incident signal as a function of the digital signal received.

**29.** A simulator as claimed in claim 22 or 28, characterised in that the cell-error generation means (300) have means for recognising headers (301), means for generating a replacement cell (302) and multiplexing means (303) enabling an incident cell to be replaced with a replacement cell, on a command from the header recognition means.

**30.** A simulator as claimed in claim 28, characterised in that the memory means (200) have a memory (201) with a first (Z1) and a second (Z2) memory zone, the digital error-generation signal being made up of words corresponding to error patterns (DM), these patterns being loaded into the first memory zone, the second memory zone containing words (DR) corresponding to the numbers of times which each pattern must be read in succession; these means (200) also having an address countdown counter (203) enabling the memory zones to be addressed, this countdown counter being re-initialised by the output of the second memory zone, the means (200) also having means (202) for managing access to the memory.

**31.** A simulator as claimed in claim 30, characterised in that the memory (201) is a dynamic RAM memory.

**32.** A simulator as claimed in claim 30 or claim 31, characterised in that the memory (201) is a video RAM memory.

**33.** A simulator as claimed in claim 23, characterised in that the jitter means consist of:

- memory means for storing a jitter reference (500), set up beforehand;
- means (600) for measuring the space between cells relating to a same communication;
- means for switching (700) incident cells depending on whether they relate to the same communication or not;
- control means (800) enabling the space between cells relating to a same communication to be modified or not.

**34.** A simulator as claimed in claim 27 or 33, characterised in that the space-measuring means (600) consist of:

- a cell header detector (601);
- a counter for counting the space between cells (602);
- a storage register for storing the value of this space (603).

**35.** A simulator as claimed in claim 33, characterised in that the switching means (800) have a first register (701) for storing cells relating to the same communication and a second register for storing (702) other cells.

**36.** A simulator as claimed in claim 33, characterised in that it has a register for storing (603) the space between cells relating to the same communication.

**37.** A simulator as claimed in claim 33, characterised in that the switching means also have a storage register (703) which enables octets to be read and written by pairs, the final octet of each cell being stored in this register.

**38.** A simulator sa claimed in claim 33, characterised in that the control means (800) have an arithmetic unit, a sequencer and an address logic for the registers.

**39.** A simulator as claimed in claim 33, characterised in that the memory control means have a read and write memory (500) of the static RAM type.

**40.** A simulator as claimed in claim 33, characterised in that the storage registers (701, 702) are static RAM memories.

FIG_1

# FIG_2

Du terminal A (ou B)

BP

10

20

HE H

30

40

N

R

S

Vers le bus ATM du .simulateur

Vers le terminal

50

60

E

Du bus ATM du simulateur

# FIG_3

31 32

H
SCL

BP

Fc

BP

Ac

H

33

Adrf

AdrF

D

34 :

BP

# FIG_4

# FIG_5

```
┌─────────────┐      ┌─────────────┐      ┌─────────────┐
│   CPU       │ ───▶ │ MEMORISATION│ ───▶ │ GENERATION  │ ───▶ SE
│  MEMOIRE    │      │  MODELES    │      │  D ERREURS  │
└─────────────┘      └─────────────┘      └─────────────┘
      │                    200               300      ▲ SI
      └───────────────────────────────────────────────┘
     100
```

# FIG_6

SI (ATM)

## FIG_7

## FIG_8

Stockage des cellules ATM dans FIFOG

Ecriture simultanée dans la FIFO d'écart

## FIG_9

## FIG_10